# EUROPEAN PATENT APPLICATION

(11) **EP 3 253 085 A1**
(43) Date of publication of application: **06.12.2017**
(21) Application number: 15883706.2
(22) Date of filing: 04.03.2015
(51) Int. Cl.: H04W 4/04, H04W 28/02

(54) **COMMUNICATION METHOD AND RELATED DEVICE**

(71) Applicant: Huawei Technologies Co., Ltd., Longgang District Shenzhen, Guangdong 518129 (CN)
(72) Inventor: SHI, Yi, Shenzhen Guangdong 518129 (CN); XIONG, Xin, Shenzhen Guangdong 518129 (CN); ZHAO, Zhenshan, Shenzhen Guangdong 518129 (CN); LI, Mingchao, Shenzhen Guangdong 518129 (CN)
(74) Representative: Körber, Martin Hans
(86) International application number: PCT/CN2015/073654
(87) International publication number: WO 2016/138649

(57) **Abstract**

Embodiments of the present invention provide a communication method and a related device. The method in the embodiments of the present invention includes: determining, by a vehicular device, configuration information, where the configuration information includes a first periodic status message sending parameter and a trigger condition for reporting a network congestion measurement event; determining, by the vehicular device, a network congestion indication parameter, where the network congestion indication parameter is used to indicate a congestion degree of a network environment of the vehicular device; reporting, by the vehicular device, network congestion information to the base station when the network congestion indication parameter meets the trigger condition for reporting a network congestion measurement event; receiving, by the vehicular device, a second periodic status message sending parameter that is sent by the base station according to the network congestion information, where the second periodic status message sending parameter facilitates lowering the network congestion degree in comparison with the first periodic status message sending parameter; and sending, by the vehicular device, a periodic status message according to the second periodic status message sending parameter. In the embodiments of the present invention, a network congestion problem in the Internet of Vehicles can be effectively alleviated.

## Description

### TECHNICAL FIELD

The present invention relates to the field of communications technologies, and in particular, to a communication method and a related device.

### BACKGROUND

With the continuous development of economy and the continuous progress of science and technology, transportation develops rapidly, and cars are gradually incorporated into people's daily life and become essential transportation means. While cars bring convenience to life, traffic safety problems and traffic accidents that are caused by a growing quantity of vehicles are increasingly severe, and traffic congestion problems and environmental pollution problems are also increasingly severe in a city.

To alleviate a potential congestion problem in a high density scenario, the European Internet of Vehicles defines a decentralized congestion control (DCC, Decentralized Congestion Control) mechanism in the ETSI (European Telecommunications Standards Institution, European Telecommunications Standards Institute) TS 102 687. Specifically, a vehicle periodically monitors CBRs (Channel Busy Ratio, channel busy ratio) of three channels in ITS (Intelligent Transport System, Intelligent Transport System)-G5A, and performs state transition on all the channels according to values obtained by monitoring the CBRs and parameter configuration for current DCC.

The European DCC mechanism provides a decentralized congestion control algorithm. Each vehicle partially senses busy/idle statuses of surrounding transmission channels of the vehicle, so as to maintain state transitions of all the channels, and dynamically adjust a distribution proportion of safety messages of the vehicle on all the channels. The technology has the following disadvantages:
1. Fault tolerance is poor. It is specified in the DCC that a vehicle partially monitors channel busy/idle statuses to independently perform channel state transition and congestion control. Therefore, accuracy of a channel monitoring module in the vehicle directly affects effectiveness of congestion control. Erroneous determining of a vehicle on a channel busy/idle status directly affects accuracy for measuring a channel state by a surrounding vehicle of the vehicle. This directly affects performance of this system.
2. Effectiveness is poor. Related channel state transition parameter setting of the DCC mechanism has a direct relationship with performance of the DCC mechanism. Improper parameter setting may cause a vehicle to transition between different channel states back and forth, and consequently, the system becomes more unstable. In addition, for performance of overall congestion control of the system, a DCC parameter also needs to be finely adjusted, and a mechanism is complex.
3. Flexibility is poor. The European Internet of Vehicles specifies that a communication resource for transmitting a CAM (Cooperative-Awareness Message, co-operative awareness message) message is 30 M frequency band specified in the ITS-G5A. When all channels are in a congestion state, some distributed CAM messages are to be discarded, and consequently, a requirement of an application layer cannot be met. This directly affects timeliness of exchange of a safety message between vehicles, and causes a potential safety risk.

### SUMMARY

Embodiments of the present invention provide a communication method and a related device, so as to effectively alleviate a network congestion problem in the Internet of Vehicles.

A first aspect of the present invention provides a communication method, including:
determining, by a vehicular device, configuration information, where the configuration information includes a first periodic status message sending parameter and a trigger condition for reporting a network congestion measurement event;
determining, by the vehicular device, a network congestion indication parameter, where the network congestion indication parameter is used to indicate a congestion degree of a network environment of the vehicular device;
reporting, by the vehicular device, network congestion information to the base station when the network congestion indication parameter meets the trigger condition for reporting a network congestion measurement event;
receiving, by the vehicular device, a second periodic status message sending parameter that is sent by the base station according to the network congestion information, where the second periodic status message sending parameter facilitates lowering the network congestion degree in comparison with the first periodic status message sending parameter; and
sending, by the vehicular device, a periodic status message according to the second periodic status message sending parameter.

With reference to the first aspect of the present invention, in a first implementation of the first aspect of the present invention, that the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

With reference to the first aspect of the present invention, in a second implementation of the first aspect of the present invention, the determining, by a vehicular device, configuration information specifically includes one of the following:
receiving, by the vehicular device, a configuration message that is sent by the base station by means of system broadcast, so as to determine the configuration information;
receiving, by the vehicular device, a configuration message that is sent by the base station by using radio resource control dedicated signaling, so as to determine the configuration information; or
determining, by the vehicular device, the configuration information by means of preconfiguration.

With reference to the first aspect of the present invention, the first implementation of the first aspect, or the second implementation of the first aspect, in a third implementation of the first aspect of the present invention, that the network congestion indication parameter meets the trigger condition for reporting a network congestion measurement event specifically includes:
vehicle-to-vehicle communication resource usage is greater than or equal to a first threshold in a first time period.

With reference to the third implementation of the first aspect of the present invention, in a fourth implementation of the first aspect of the present invention, the method further includes:
when the vehicle-to-vehicle communication resource usage is less than the first threshold in the first time period, stopping, by the vehicular device, reporting network congestion information to the base station.

With reference to the first aspect of the present invention, the first implementation of the first aspect, or the second implementation of the first aspect, in a fifth implementation of the first aspect of the present invention, that the network congestion indication parameter meets the trigger condition for reporting a network congestion measurement event specifically includes:
a rate of successfully receiving a vehicle-to-vehicle communication data packet is less than or equal to a second threshold in a first time period.

With reference to the fifth implementation of the first aspect of the present invention, in a sixth implementation of the first aspect of the present invention, the method further includes:
when the rate of successfully receiving a vehicle-to-vehicle communication data packet is greater than the second threshold in the first time period, stopping, by the vehicular device, reporting network congestion information to the base station.

With reference to the first aspect of the present invention, the first implementation of the first aspect, or the second implementation of the first aspect, in a seventh implementation of the first aspect of the present invention, that the network congestion indication parameter meets the trigger condition for reporting a network congestion measurement event specifically includes:
duration for waiting to send a vehicle-to-vehicle communication data packet is greater than or equal to a third threshold in a first time period.

With reference to the seventh implementation of the first aspect of the present invention, in an eighth implementation of the first aspect of the present invention, the method further includes:
when the duration for waiting to send a vehicle-to-vehicle communication data packet is less than the third threshold in the first time period, stopping, by the vehicular device, reporting network congestion information to the base station.

With reference to the first aspect of the present invention, the first implementation of the first aspect, or the second implementation of the first aspect, in a ninth implementation of the first aspect of the present invention, the configuration information further includes a first system communications parameter, the first system communications parameter includes system communication bandwidth and/or a quantity of configured subframes, and the method further includes:
when the second periodic status message sending parameter reaches a fourth threshold, receiving, by the vehicular device, a second system communications parameter sent by the base station, where the second system communications parameter facilitates lowering the network congestion degree in comparison with the first system communications parameter; and
performing, by the vehicular device, reconfiguration according to the second system communications parameter.

With reference to the ninth implementation of the first aspect of the present invention, in a tenth implementation of the first aspect of the present invention, that the second system communications parameter facilitates lowering the network congestion degree in comparison with the first system communications parameter includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

With reference to the ninth implementation of the first aspect of the present invention, in an eleventh implementation of the first aspect of the present invention, that the second periodic status message sending parameter reaches the fourth threshold includes at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

With reference to the ninth implementation of the first aspect of the present invention, in a twelfth implementation of the first aspect of the present invention, the configuration information further includes a trigger condition for reporting a network idleness measurement event, and the method further includes:
determining, by the vehicular device, a network idleness indication parameter, where the network idleness indication parameter is used to indicate an idleness degree of the network environment of the vehicular device;
reporting, by the vehicular device, network idleness information to the base station when the network idleness indication parameter meets the trigger condition for reporting a network idleness measurement event;
receiving, by the vehicular device, a third system communications parameter that is sent by the base station according to the network idleness information, where the third system communications parameter facilitates lowering the network idleness degree in comparison with the second system communications parameter; and
performing, by the vehicular device, reconfiguration according to the third system communications parameter.

With reference to the twelfth implementation of the first aspect of the present invention, in a thirteenth implementation of the first aspect of the present invention, the method further includes:
when the third system communications parameter reaches a fifth threshold, receiving, by the vehicular device, a third periodic status message sending parameter sent by the base station, where the third periodic status message sending parameter facilitates lowering the network idleness degree in comparison with the second periodic status message sending parameter; and
sending, by the vehicular device, a periodic status message according to the third periodic status message sending parameter.

A second aspect of the present invention provides a communication method, including:
sending, by a base station, a configuration message to a vehicular device, so that the vehicular device determines configuration information, where the configuration information includes a first periodic status message sending parameter and a trigger condition for reporting a network congestion measurement event;
receiving, by the base station, network congestion information, where the network congestion information indicates that a network congestion parameter determined by the vehicular device meets the trigger condition for reporting a network congestion measurement event, and the network congestion parameter is used to indicate a congestion degree of a network environment of the vehicular device; and
sending, by the base station, a second periodic status message sending parameter to the vehicular device according to the network congestion information, so that the vehicular device sends a periodic status message according to the second periodic status message sending parameter, where the second periodic status message sending parameter facilitates lowering the network congestion degree in comparison with the first periodic status message sending parameter.

With reference to the second aspect of the present invention, in a first implementation of the second aspect of the present invention, that the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

With reference to the second aspect of the present invention, in a second implementation of the second aspect of the present invention, the sending, by a base station, a configuration message to a vehicular device specifically includes one of the following:
sending, by the base station, the configuration message to the vehicular device by means of system broadcast; or
sending, by the base station, the configuration message to the vehicular device by using radio resource control dedicated signaling.

With reference to the second aspect of the present invention, the first implementation of the second aspect, or the second implementation of the second aspect, in a third implementation of the second aspect of the present invention, the network congestion information is sent when vehicle-to-vehicle communication resource usage is greater than or equal to a first threshold in a first time period.

With reference to the second aspect of the present invention, the first implementation of the second aspect, or the second implementation of the second aspect, in a fourth implementation of the second aspect of the present invention, the network congestion information is sent when a rate of successfully receiving a vehicle-to-vehicle communication data packet is less than or equal to a second threshold in a first time period.

With reference to the second aspect of the present invention, the first implementation of the second aspect, or the second implementation of the second aspect, in a fifth implementation of the second aspect of the present invention, the network congestion information is sent when duration for waiting to send a vehicle-to-vehicle communication data packet is greater than or equal to a third threshold in a first time period.

With reference to the second aspect of the present invention, the first implementation of the second aspect, or the second implementation of the second aspect, in a sixth implementation of the second aspect of the present invention, the configuration information further includes a first system communications parameter, the first system communications parameter includes system communication bandwidth and/or a quantity of configured subframes, and the method further includes:
when the second periodic status message sending parameter reaches a fourth threshold, sending, by the base station, a second system communications parameter to the vehicular device, so that the vehicular device performs reconfiguration according to the second system communications parameter, where the second system communications parameter facilitates lowering the network congestion degree in comparison with the first system communications parameter.

With reference to the sixth implementation of the second aspect of the present invention, in a seventh implementation of the second aspect of the present invention, that the second system communications parameter facilitates lowering the network congestion degree in comparison with the first system communications parameter includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

With reference to the sixth implementation of the second aspect of the present invention, in an eighth implementation of the second aspect of the present invention, that the second periodic status message sending parameter reaches the fourth threshold includes at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

With reference to the sixth implementation of the second aspect of the present invention, in a ninth implementation of the second aspect of the present invention, the configuration information further includes a trigger condition for reporting a network idleness measurement event, and the method further includes:
receiving, by the base station, network idleness information, where the network idleness information indicates that a network idleness parameter determined by the vehicular device meets the trigger condition for reporting a network idleness measurement event, and the network idleness parameter is used to indicate an idleness degree of the network environment of the vehicular device; and
sending, by the base station, a third system communications parameter to the vehicular device according to the network idleness information, so that the vehicular device performs reconfiguration according to the third system communications parameter, where the third system communications parameter facilitates lowering the network idleness degree in comparison with the second system communications parameter.

With reference to the ninth implementation of the second aspect of the present invention, in a tenth implementation of the second aspect of the present invention, the method further includes:
when the third system communications parameter reaches a fifth threshold, sending, by the base station, a third periodic status message sending parameter to the vehicular device, so that the vehicular device sends a periodic status message according to the third periodic status message sending parameter, where the third periodic status message sending parameter facilitates lowering the network idleness degree in comparison with the second periodic status message sending parameter.

A third aspect of the present invention provides a vehicular device, including:
a first determining unit, configured to determine configuration information, where the configuration information includes a first periodic status message sending parameter and a trigger condition for reporting a network congestion measurement event;
a second determining unit, configured to determine a network congestion indication parameter, where the network congestion indication parameter is used to indicate a congestion degree of a network environment of the vehicular device;
a first reporting unit, configured to report network congestion information to the base station when the network congestion indication parameter meets the trigger condition for reporting a network congestion measurement event;
a first receiving unit, configured to receive a second periodic status message sending parameter that is sent by the base station according to the network congestion information, where the second periodic status message sending parameter facilitates lowering the network congestion degree in comparison with the first periodic status message sending parameter; and
a first sending unit, configured to send a periodic status message according to the second periodic status message sending parameter.

With reference to the third aspect of the present invention, in a first implementation of the third aspect of the present invention, that the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

With reference to the third aspect of the present invention, in a second implementation of the third aspect of the present invention,
the first determining unit is specifically configured to receive a configuration message that is sent by the base station by means of system broadcast, so as to determine the configuration information; or
the first determining unit is specifically configured to receive a configuration message that is sent by the base station by using radio resource control dedicated signaling, so as to determine the configuration information; or
the first determining unit is specifically configured to determine the configuration information by means of preconfiguration.

With reference to the third aspect of the present invention, the first implementation of the third aspect, or the second implementation of the third aspect, in a third implementation of the third aspect of the present invention, the configuration information further includes a first system communications parameter, the first system communications parameter includes system communication bandwidth and/or a quantity of configured subframes, and the device further includes:
a second receiving unit, configured to: when the second periodic status message sending parameter reaches a fourth threshold, receive a second system communications parameter sent by the base station, where the second system communications parameter facilitates lowering the network congestion degree in comparison with the first system communications parameter; and
a first reconfiguration unit, configured to perform reconfiguration according to the second system communications parameter.

With reference to the third implementation of the third aspect of the present invention, in a fourth implementation of the third aspect of the present invention, that the second system communications parameter facilitates lowering the network congestion degree in comparison with the first system communications parameter includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

With reference to the third implementation of the third aspect of the present invention, in a fifth implementation of the third aspect of the present invention, that the second periodic status message sending parameter reaches the fourth threshold includes at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

With reference to the third implementation of the third aspect of the present invention, in a sixth implementation of the third aspect of the present invention, the configuration information further includes a trigger condition for reporting a network idleness measurement event, and the device further includes:
a third determining unit, configured to determine a network idleness indication parameter, where the network idleness indication parameter is used to indicate an idleness degree of the network environment of the vehicular device;
a second reporting unit, configured to report network idleness information to the base station when the network idleness indication parameter meets the trigger condition for reporting a network idleness measurement event;
a fourth receiving unit, configured to receive a third system communications parameter that is sent by the base station according to the network idleness information, where the third system communications parameter facilitates lowering the network idleness degree in comparison with the second system communications parameter; and
a second reconfiguration unit, configured to perform reconfiguration according to the third system communications parameter.

With reference to the sixth implementation of the third aspect of the present invention, in a seventh implementation of the third aspect of the present invention, the device further includes:
a fifth receiving unit, configured to: when the third system communications parameter reaches a fifth threshold, receive a third periodic status message sending parameter sent by the base station, where the third periodic status message sending parameter facilitates lowering the network idleness degree in comparison with the second periodic status message sending parameter; and
a second sending unit, configured to send a periodic status message according to the third periodic status message sending parameter.

A fourth aspect of the present invention provides a base station device, including:
a first sending module, configured to send a configuration message to a vehicular device, so that the vehicular device determines configuration information, where the configuration information includes a first periodic status message sending parameter and a trigger condition for reporting a network congestion measurement event;
a first receiving module, configured to receive network congestion information, where the network congestion information indicates that a network congestion parameter determined by the vehicular device meets the trigger condition for reporting a network congestion measurement event, and the network congestion parameter is used to indicate a congestion degree of a network environment of the vehicular device; and
a second sending module, configured to send a second periodic status message sending parameter to the vehicular device according to the network congestion information, so that the vehicular device sends a periodic status message according to the second periodic status message sending parameter, where the second periodic status message sending parameter facilitates lowering the network congestion degree in comparison with the first periodic status message sending parameter.

With reference to the fourth aspect of the present invention, in a first implementation of the fourth aspect of the present invention, that the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

With reference to the fourth aspect of the present invention, in a second implementation of the fourth aspect of the present invention,
the first sending module is specifically configured to send the configuration message to the vehicular device by means of system broadcast; or
the first sending module is specifically configured to send the configuration message to the vehicular device by using radio resource control dedicated signaling.

With reference to the fourth aspect of the present invention, the first implementation of the fourth aspect, or the second implementation of the fourth aspect, in a third implementation of the fourth aspect of the present invention, the configuration information further includes a first system communications parameter, the first system communications parameter includes system communication bandwidth and/or a quantity of configured subframes, and the device further includes:
a third sending module, configured to: when the second periodic status message sending parameter reaches a fourth threshold, send a second system communications parameter to the vehicular device, so that the vehicular device performs reconfiguration according to the second system communications parameter, where the second system communications parameter facilitates lowering the network congestion degree in comparison with the first system communications parameter.

With reference to the third implementation of the fourth aspect of the present invention, in a fourth implementation of the fourth aspect of the present invention, that the second system communications parameter facilitates lowering the network congestion degree in comparison with the first system communications parameter includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

With reference to the third implementation of the fourth aspect of the present invention, in a fifth implementation of the fourth aspect of the present invention, that the second periodic status message sending parameter reaches the fourth threshold includes at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

With reference to the third implementation of the fourth aspect of the present invention, in a sixth implementation of the fourth aspect of the present invention, the configuration information further includes a trigger condition for reporting a network idleness measurement event, and the device further includes:
a second receiving module, configured to receive network idleness information, where the network idleness information indicates that a network idleness parameter determined by the vehicular device meets the trigger condition for reporting a network idleness measurement event, and the network idleness parameter is used to indicate an idleness degree of the network environment of the vehicular device; and
a fourth sending module, configured to send a third system communications parameter to the vehicular device according to the network idleness information, so that the vehicular device performs reconfiguration according to the third system communications parameter, where the third system communications parameter facilitates lowering the network idleness degree in comparison with the second system communications parameter.

With reference to the sixth implementation of the fourth aspect of the present invention, in a seventh implementation of the fourth aspect of the present invention, the device further includes:
a fifth sending module, configured to: when the third system communications parameter reaches a fifth threshold, send a third periodic status message sending parameter to the vehicular device, so that the vehicular device sends a periodic status message according to the third periodic status message sending parameter, where the third periodic status message sending parameter facilitates lowering the network idleness degree in comparison with the second periodic status message sending parameter.

A fifth aspect of the present invention provides a vehicular device, including: a receiver, a transmitter, a processor, and a memory, where the processor is configured to perform the following operations:
determining configuration information, where the configuration information includes a first periodic status message sending parameter and a trigger condition for reporting a network congestion measurement event;
determining a network congestion indication parameter, where the network congestion indication parameter is used to indicate a congestion degree of a network environment of the vehicular device;
reporting network congestion information to the base station when the network congestion indication parameter meets the trigger condition for reporting a network congestion measurement event;
receiving a second periodic status message sending parameter that is sent by the base station according to the network congestion information, where the second periodic status message sending parameter facilitates lowering the network congestion degree in comparison with the first periodic status message sending parameter; and
sending a periodic status message according to the second periodic status message sending parameter.

With reference to the fifth aspect of the present invention, in a first implementation of the fifth aspect of the present invention, the configuration information further includes a first system communications parameter, the first system communications parameter includes system communication bandwidth and/or a quantity of configured subframes, and the processor is further configured to perform the following operations:
when the second periodic status message sending parameter reaches a fourth threshold, receiving a second system communications parameter sent by the base station, where the second system communications parameter facilitates lowering the network congestion degree in comparison with the first system communications parameter; and
performing reconfiguration according to the second system communications parameter.

With reference to the first implementation of the fifth aspect of the present invention, in a second implementation of the fifth aspect of the present invention, the configuration information further includes a trigger condition for reporting a network idleness measurement event, and the processor is further configured to perform the following operations:
determining a network idleness indication parameter, where the network idleness indication parameter is used to indicate an idleness degree of the network environment of the vehicular device;
reporting network idleness information to the base station when the network idleness indication parameter meets the trigger condition for reporting a network idleness measurement event;
receiving a third system communications parameter that is sent by the base station according to the network idleness information, where the third system communications parameter facilitates lowering the network idleness degree in comparison with the second system communications parameter; and
performing reconfiguration according to the third system communications parameter.

With reference to the second implementation of the fifth aspect of the present invention, in a third implementation of the fifth aspect of the present invention, the processor is further configured to perform the following operations:
when the third system communications parameter reaches a fifth threshold, receiving a third periodic status message sending parameter sent by the base station, where the third periodic status message sending parameter facilitates lowering the network idleness degree in comparison with the second periodic status message sending parameter; and
sending a periodic status message according to the third periodic status message sending parameter.

A sixth aspect of the present invention provides a base station device, including: a receiver, a transmitter, a processor, and a memory, where the processor is configured to perform the following operations:
sending a configuration message to a vehicular device, so that the vehicular device determines configuration information, where the configuration information includes a first periodic status message sending parameter and a trigger condition for reporting a network congestion measurement event;
receiving network congestion information, where the network congestion information indicates that a network congestion parameter determined by the vehicular device meets the trigger condition for reporting a network congestion measurement event, and the network congestion parameter is used to indicate a congestion degree of a network environment of the vehicular device; and
sending a second periodic status message sending parameter to the vehicular device according to the network congestion information, so that the vehicular device sends a periodic status message according to the second periodic status message sending parameter, where the second periodic status message sending parameter facilitates lowering the network congestion degree in comparison with the first periodic status message sending parameter.

With reference to the sixth aspect of the present invention, in a first implementation of the sixth aspect of the present invention, the configuration information further includes a first system communications parameter, the first system communications parameter includes system communication bandwidth and/or a quantity of configured subframes, and the processor is further configured to perform the following operation:
when the second periodic status message sending parameter reaches a fourth threshold, sending a second system communications parameter to the vehicular device, so that the vehicular device performs reconfiguration according to the second system communications parameter, where the second system communications parameter facilitates lowering the network congestion degree in comparison with the first system communications parameter.

With reference to the first implementation of the sixth aspect of the present invention, in a second implementation of the sixth aspect of the present invention, the configuration information further includes a trigger condition for reporting a network idleness measurement event, and the processor is further configured to perform the following operations:
receiving network idleness information, where the network idleness information indicates that a network idleness parameter determined by the vehicular device meets the trigger condition for reporting a network idleness measurement event, and the network idleness parameter is used to indicate an idleness degree of the network environment of the vehicular device; and
sending a third system communications parameter to the vehicular device according to the network idleness information, so that the vehicular device performs reconfiguration according to the third system communications parameter, where the third system communications parameter facilitates lowering the network idleness degree in comparison with the second system communications parameter.

With reference to the second implementation of the sixth aspect of the present invention, in a third implementation of the sixth aspect of the present invention, the processor is further configured to perform the following operation:
when the third system communications parameter reaches a fifth threshold, sending a third periodic status message sending parameter to the vehicular device, so that the vehicular device sends a periodic status message according to the third periodic status message sending parameter, where the third periodic status message sending parameter facilitates lowering the network idleness degree in comparison with the second periodic status message sending parameter.

It can be learned from the foregoing technical solutions that the embodiments of the present invention have the following advantages: A vehicular device reports network congestion information to a base station when a network congestion indication parameter meets a trigger condition for reporting a network congestion measurement event. The vehicular device receives a second periodic status message sending parameter that is sent by the base station according to the network congestion information, and sends a periodic status message according to the second periodic status message sending parameter. Therefore, global congestion control is performed on network congestion, so as to effectively alleviate a network congestion problem in the Internet of Vehicles, and improve stability of a congestion control system.

### BRIEF DESCRIPTION OF DRAWINGS

FIG. 1 is a schematic flowchart of an embodiment of a communication method according to the present invention;
FIG. 2 is a schematic flowchart of another embodiment of a communication method according to the present invention;
FIG. 3 is a schematic flowchart of another embodiment of a communication method according to the present invention;
FIG. 4 is a schematic flowchart of another embodiment of a communication method according to the present invention;
FIG. 5 is a schematic flowchart of another embodiment of a communication method according to the present invention;
FIG. 6A and FIG. 6B are schematic flowcharts of another embodiment of a communication method according to the present invention;
FIG. 7A and FIG. 7B are schematic flowcharts of another embodiment of a communication method according to the present invention;
FIG. 8 is a schematic flowchart of another embodiment of a communication method according to the present invention;
FIG. 9 is a schematic flowchart of another embodiment of a communication method according to the present invention;
FIG. 10 is a schematic flowchart of another embodiment of a communication method according to the present invention;
FIG. 11 is a schematic flowchart of another embodiment of a communication method according to the present invention;
FIG. 12 is a schematic structural diagram of an embodiment of a vehicular device according to the present invention;
FIG. 13 is a schematic structural diagram of another embodiment of a vehicular device according to the present invention;
FIG. 14 is a schematic structural diagram of another embodiment of a vehicular device according to the present invention;
FIG. 15 is a schematic structural diagram of another embodiment of a vehicular device according to the present invention;
FIG. 16 is a schematic structural diagram of another embodiment of a vehicular device according to the present invention;
FIG. 17 is a schematic structural diagram of an embodiment of a base station device according to the present invention;
FIG. 18 is a schematic structural diagram of another embodiment of a base station device according to the present invention;
FIG. 19 is a schematic structural diagram of another embodiment of a base station device according to the present invention;
FIG. 20 is a schematic structural diagram of another embodiment of a base station device according to the present invention; and
FIG. 21 is a schematic structural diagram of another embodiment of a base station device according to the present invention.

### DESCRIPTION OF EMBODIMENTS

The following clearly and completely describes the technical solutions in the embodiments of the present invention with reference to the accompanying drawings in the embodiments of the present invention. Apparently, the following described embodiments are merely some but not all of the embodiments of the present invention. All other embodiments obtained by persons of ordinary skill in the art based on the embodiments of the present invention without creative efforts shall fall within the protection scope of the present invention.

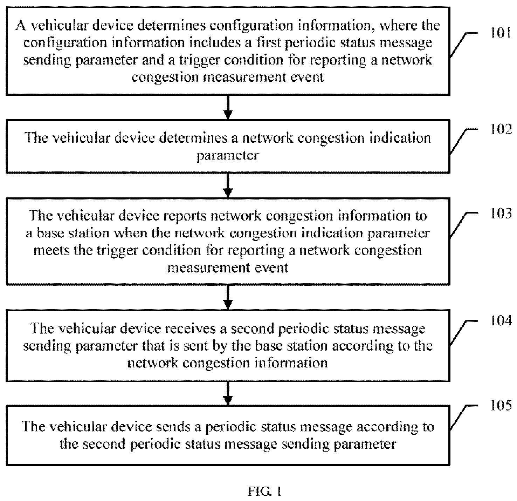

Referring to FIG. 1, an embodiment of a communication method provided in the present invention includes the following steps.
101. A vehicular device determines configuration information, where the configuration information includes a first periodic status message sending parameter and a trigger condition for reporting a network congestion measurement event.

It should be noted that the configuration information includes the first PSM (Periodic Status Message, periodic status message) sending parameter and the trigger condition for reporting a network congestion measurement event. To ensure safe running of vehicles, status information needs to be periodically exchanged between the vehicles by using a VDC (Vehicle Direct Communication, vehicle direct communication) interface. The exchanged status information is referred to as a BSM (Basic Safety Message, basic safety message) in America, is referred to as a CAM in Europe, and is collectively referred to as a PSM herein. The PSM may be understood as a "heartbeat packet" of a vehicle. The PSM sending parameter includes information such as a location of the vehicle, a speed of the vehicle, and a status of the vehicle, and is broadcast to a surrounding vehicle in a single-hop manner, usually, at frequency of 100 ms per time. By analyzing a received PSM sending parameter of the surrounding vehicle, an imminent danger may be determined and warned of, so as to reduce occurrence of disasters. That a vehicular device determines configuration information specifically includes one of the following:
receiving, by the vehicular device, a configuration message that is sent by a base station by means of system broadcast, so as to determine the configuration information;
receiving, by the vehicular device, a configuration message that is sent by a base station by using radio resource control dedicated signaling, so as to determine the configuration information; or
determining, by the vehicular device, the configuration information by means of preconfiguration.

Communication may be performed by setting a corresponding function module in the vehicular device. Specifically, two communications modules are mounted on the vehicular device. One is a conventional LTE (Long Term Evolution, Long Term Evolution) communications module used for communication and information exchange between a vehicle and a base station. The other is a VDC communications module used for direct communication between vehicles (during which a message is not forwarded by the base station). An operating band of the VDC communications module may be a dedicated spectrum for vehicle direct communication, may be a conventional LTE spectrum, or may be an unlicensed spectrum. In addition, a communications technology of the VDC communications module may be a communications technology of 802.11p currently used in Europe and America, or may be a VDC communications technology designed based on LTE. In this embodiment of the present invention, the VDC communications module configures, according to a system broadcast message received by the LTE communications module, the first PSM sending parameter of the VDC communications module and the trigger condition for reporting a network congestion measurement event, and performs V2V (vehicle-to-vehicle, vehicle-to-vehicle) communication with another vehicle.
102. The vehicular device determines a network congestion indication parameter.

It should be noted that the network congestion indication parameter is used to indicate a congestion degree of a network environment of the vehicular device.
103. The vehicular device reports network congestion information to the base station when the network congestion indication parameter meets the trigger condition for reporting a network congestion measurement event.

It should be noted that the vehicular device monitors the network congestion indication parameter according to the configured trigger condition for reporting a network congestion measurement event, and if a monitoring result indicates that the trigger condition for reporting a network congestion measurement event is met, the vehicular device reports the network congestion information to the base station.
104. The vehicular device receives a second periodic status message sending parameter that is sent by the base station according to the network congestion information.

It should be noted that the second periodic status message sending parameter facilitates lowering the network congestion degree in comparison with the first periodic status message sending parameter. That the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

It may be understood that the second periodic status message sending parameter may be information that is sent by the base station by means of system broadcast and that is about reconfiguring a first PSM sending parameter used for collective congestion control of vehicles in a cell, or information that is sent by using RRC (Radio Resource Control, radio resource control) dedicated signaling and that is about reconfiguring a first PSM sending parameter used for separate congestion control of a specified vehicle in a cell.
105. The vehicular device sends a periodic status message according to the second periodic status message sending parameter.

It should be noted that the VDC communications module in the vehicular device reconfigures a V2V communications parameter of the VDC communications module according to the second PSM sending parameter, and sends the PSM to a surrounding vehicle.

In this embodiment of the present invention, a vehicular device reports network congestion information to a base station when a network congestion indication parameter meets a trigger condition for reporting a network congestion measurement event. The vehicular device receives a second periodic status message sending parameter that is sent by the base station according to the network congestion information, and sends a periodic status message according to the second periodic status message sending parameter. Therefore, global congestion control is performed on network congestion, so as to effectively alleviate a network congestion problem in the Internet of Vehicles, and improve stability of a congestion control system.

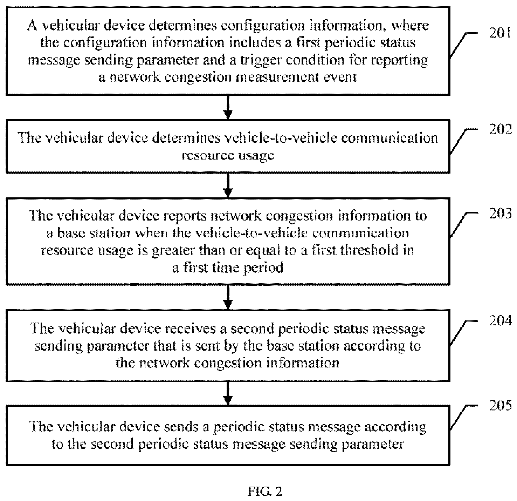

Referring to FIG. 2, another embodiment of a communication method provided in the present invention includes the following steps.
201. A vehicular device determines configuration information, where the configuration information includes a first periodic status message sending parameter and a trigger condition for reporting a network congestion measurement event.

For a specific process of step 201, refer to step 101 shown in FIG. 1. Based on the content described in step 101, it should be additionally noted herein that important parameters of the trigger condition for reporting a network congestion measurement event may be a network congestion reporting threshold Thresh_high and a monitoring time T.
202. The vehicular device determines vehicle-to-vehicle communication resource usage.

It should be noted that the vehicle-to-vehicle communication resource usage is used to indicate a congestion degree of a network environment of the vehicular device, and is specifically used to indicate a CBR (Channel Busy Ratio, channel busy ratio).
203. The vehicular device reports network congestion information to the base station when the vehicle-to-vehicle communication resource usage is greater than or equal to a first threshold in a first time period.

It should be noted that the vehicular device monitors the vehicle-to-vehicle communication resource usage according to the configured trigger condition for reporting a network congestion measurement event. When the trigger condition for reporting a network congestion measurement event is met if the measured vehicle-to-vehicle communication resource usage is greater than or equal to the first threshold in the first time period (that is, in the monitoring time T), the vehicular device enables an RRC connection process, establishes an RRC connection to the base station, and reports the network congestion information to the base station. The network congestion information includes a CBR and/or a current PSM sending parameter. The CBR may be usage of all PRBs (Physical Resource Block, physical resource block). The PSM sending parameter may include PSM transmit power, a PSM sending period, PSM sending frequency, a PSM transmission rate, a PSM packet size, and the like. It may be understood that when the trigger condition for reporting a network congestion measurement event is not met if the measured vehicle-to-vehicle communication resource usage is less than the first threshold in the first time period (that is, in the monitoring time T), the vehicular device releases an RRC connection to the base station, and stops reporting network congestion information to the base station. In this embodiment, this may be specifically implemented in the following manner:

For example, the trigger condition for reporting a network congestion measurement event may be as follows: Reporting of a network congestion measurement event is triggered when the vehicle-to-vehicle communication resource usage measured in the monitoring time T is greater than or equal to the network congestion reporting threshold Thresh_high. To avoid a ping-pong effect, an entering condition of the network congestion measurement event and a leaving condition of the network congestion measurement event may be defined. For example,
the entering condition is:
Ms - Hys > Thresh_high; and
the leaving condition is:
Ms + Hys < Thresh_high, where
Hys is a hysteresis parameter related to the network congestion measurement event, and Ms is a value obtained by the vehicular device by measuring the vehicle-to-vehicle communication resource usage.
204. The vehicular device receives a second periodic status message sending parameter that is sent by the base station according to the network congestion information.
205. The vehicular device sends a periodic status message according to the second periodic status message sending parameter.

It should be noted that, for specific processes of steps 204 and 205, correspondingly refer to steps 104 and 105 shown in FIG. 1, and details are not described herein again.

In this embodiment of the present invention, a vehicular device determines vehicle-to-vehicle communication resource usage. The vehicular device reports network congestion information to a base station when the vehicle-to-vehicle communication resource usage is greater than or equal to a first threshold in a first time period. The vehicular device receives a second periodic status message sending parameter that is sent by the base station according to the network congestion information, and sends a periodic status message according to the second periodic status message sending parameter. Therefore, global congestion control is performed on network congestion, so as to effectively alleviate a network congestion problem in the Internet of Vehicles, and improve stability of a congestion control system.

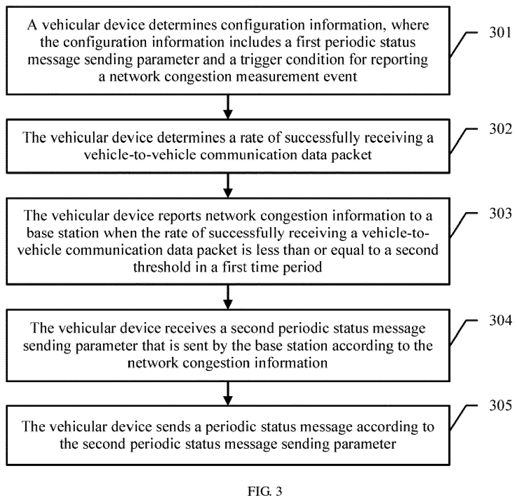

Referring to FIG. 3, another embodiment of a communication method provided in the present invention includes the following steps.
301. A vehicular device determines configuration information, where the configuration information includes a first periodic status message sending parameter and a trigger condition for reporting a network congestion measurement event.
302. The vehicular device determines a rate of successfully receiving a vehicle-to-vehicle communication data packet.

It should be noted that, the rate of successfully receiving a vehicle-to-vehicle communication data packet is used to indicate a congestion degree of a network environment of the vehicular device.
303. The vehicular device reports network congestion information to the base station when the rate of successfully receiving a vehicle-to-vehicle communication data packet is less than or equal to a second threshold in a first time period.

A difference between step 303 and step 203 in the embodiment shown in FIG. 2 is as follows: In step 203, the trigger condition for reporting a network congestion measurement event is that the vehicle-to-vehicle communication resource usage is greater than or equal to the first threshold, but in step 303, the trigger condition for reporting a network congestion measurement event is that the rate of successfully receiving a vehicle-to-vehicle communication data packet is less than or equal to the second threshold. For a specific implementation of step 303, refer to step 203, and details are not described herein again.
304. The vehicular device receives a second periodic status message sending parameter that is sent by the base station according to the network congestion information.
305. The vehicular device sends a periodic status message according to the second periodic status message sending parameter.

It should be noted that, for specific processes of steps 301, 304, and 305, respectively refer to steps 201, 204, and 205 in the embodiment shown in FIG. 2, and details are not described herein again.

In this embodiment of the present invention, a vehicular device determines a rate of successfully receiving a vehicle-to-vehicle communication data packet. The vehicular device reports network congestion information to a base station when the rate of successfully receiving a vehicle-to-vehicle communication data packet is less than or equal to a second threshold in a first time period. The vehicular device receives a second periodic status message sending parameter that is sent by the base station according to the network congestion information, and sends a periodic status message according to the second periodic status message sending parameter. Therefore, global congestion control is performed on network congestion, so as to effectively alleviate a network congestion problem in the Internet of Vehicles, and improve stability of a congestion control system.

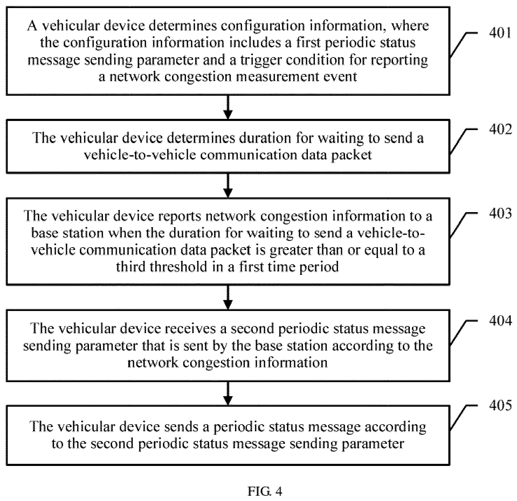

Referring to FIG. 4, another embodiment of a communication method provided in the present invention includes the following steps.
401. A vehicular device determines configuration information, where the configuration information includes a first periodic status message sending parameter and a trigger condition for reporting a network congestion measurement event.
402. The vehicular device determines duration for waiting to send a vehicle-to-vehicle communication data packet.

It should be noted that the duration that is for waiting to send a vehicle-to-vehicle communication data packet and that is determined by the vehicular device is used to indicate a congestion degree of a network environment of the vehicular device.
403. The vehicular device reports network congestion information to the base station when the duration for waiting to send a vehicle-to-vehicle communication data packet is greater than or equal to a third threshold in a first time period.

A difference between step 403 and step 203 in the embodiment shown in FIG. 2 is as follows: In step 203, the trigger condition for reporting a network congestion measurement event is that the vehicle-to-vehicle communication resource usage is greater than or equal to the first threshold, but in step 403, the trigger condition for reporting a network congestion measurement event is that the duration for waiting to send a vehicle-to-vehicle communication data packet is greater than or equal to the third threshold. The duration for waiting for sending is used to indicate whether the vehicular device has obtained a communication resource by means of contention, or whether the vehicular device has received a scheduling message of the base station. For a specific implementation of step 403, refer to step 203, and details are not described herein again.
404. The vehicular device receives a second periodic status message sending parameter that is sent by the base station according to the network congestion information.
405. The vehicular device sends a periodic status message according to the second periodic status message sending parameter.

It should be noted that, for specific processes of steps 401, 404, and 405, respectively refer to steps 201, 204, and 205 in the embodiment shown in FIG. 2, and details are not described herein again.

In this embodiment of the present invention, a vehicular device determines duration for waiting to send a vehicle-to-vehicle communication data packet. The vehicular device reports network congestion information to a base station when the duration for waiting to send a vehicle-to-vehicle communication data packet is greater than or equal to a third threshold in a first time period. The vehicular device receives a second periodic status message sending parameter that is sent by the base station according to the network congestion information, and sends a periodic status message according to the second periodic status message sending parameter. Therefore, global congestion control is performed on network congestion, so as to effectively alleviate a network congestion problem in the Internet of Vehicles, and improve stability of a congestion control system.

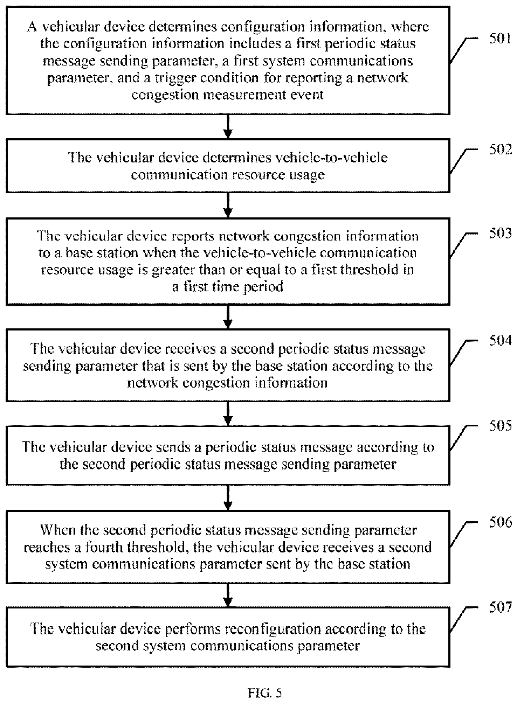

To more comprehensively resolve a network congestion problem, with reference to the communication methods described in the foregoing embodiments, in an embodiment of the present invention, level-2 congestion control specific to the network congestion problem is performed based on level-1 congestion control of network congestion. All the foregoing embodiments can be used in combination with this embodiment of the present invention. To avoid repetition, in this embodiment of the present invention, a related description of the level-2 congestion control specific to the network congestion problem is given with reference to only the embodiment shown in FIG. 2. Referring to FIG. 5, another embodiment of a communication method provided in the present invention includes the following steps.
501. A vehicular device determines configuration information, where the configuration information includes a first periodic status message sending parameter, a first system communications parameter, and a trigger condition for reporting a network congestion measurement event.

It should be noted that the first system communications parameter includes system communication bandwidth and/or a quantity of configured subframes.
502. The vehicular device determines vehicle-to-vehicle communication resource usage.
503. The vehicular device reports network congestion information to the base station when the vehicle-to-vehicle communication resource usage is greater than or equal to a first threshold in a first time period.
504. The vehicular device receives a second periodic status message sending parameter that is sent by the base station according to the network congestion information.
505. The vehicular device sends a periodic status message according to the second periodic status message sending parameter.

It should be noted that, for specific processes of steps 501 to 505, respectively refer to steps 201 to 205 in the embodiment shown in FIG. 2, and details are not described herein again.
506. When the second periodic status message sending parameter reaches a fourth threshold, the vehicular device receives a second system communications parameter sent by the base station.

It should be noted that when the second PSM sending parameter reaches the fourth threshold after the second PSM sending parameter is adjusted, the vehicular device receives the second system communications parameter sent by the base station. That the second periodic status message sending parameter reaches the fourth threshold includes at least one of the following five cases: second periodic status message transmit power is decreased to a first lower limit value, a second periodic status message sending period is increased to a first upper limit value, second periodic status message sending frequency is decreased to a second lower limit value, a second periodic status message transmission rate is decreased to a third lower limit value, or a second periodic status message size is decreased to a fourth lower limit value.

The second system communications parameter facilitates lowering a network congestion degree in comparison with the first system communications parameter. That the second system communications parameter facilitates lowering a network congestion degree in comparison with the first system communications parameter specifically includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

The second system communications parameter may be information that is sent by the base station by means of system broadcast and that is about reconfiguring a first system communications parameter used for collective congestion control of vehicles in a cell, or information that is sent by using RRC dedicated signaling and that is about reconfiguring a first system communications parameter used for separate congestion control of a specified vehicle in a cell.
507. The vehicular device performs reconfiguration according to the second system communications parameter.

It should be noted that a VDC communications module in the vehicular device reconfigures a V2V communications parameter of the VDC communications module according to the second system communications parameter.

In this embodiment of the present invention, when a second periodic status message sending parameter reaches a fourth threshold, a vehicular device receives a second system communications parameter sent by a base station, and performs reconfiguration according to the second system communications parameter. Therefore, by means of level-2 congestion control, a network congestion problem in the Internet of Vehicles can be effectively alleviated, and stability of a congestion control system is improved.

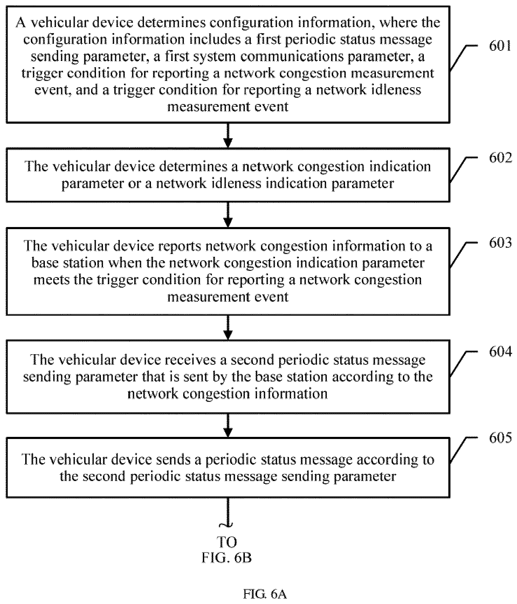

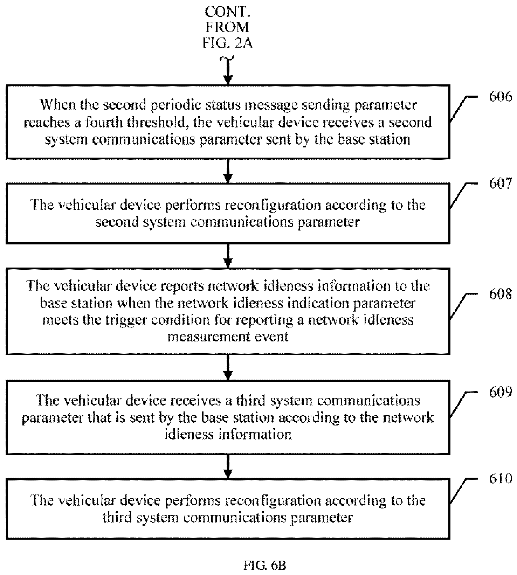

To properly use network resources, with reference to the communication methods described in the foregoing embodiments, a related description of joint control specific to a network congestion problem and a network idleness problem is given in an embodiment of the present invention. Referring to FIG. 6A and FIG. 6B, another embodiment of a communication method provided in the present invention includes the following steps.
601. A vehicular device determines configuration information, where the configuration information includes a first periodic status message sending parameter, a first system communications parameter, a trigger condition for reporting a network congestion measurement event, and a trigger condition for reporting a network idleness measurement event.

For a specific process of step 601, refer to step 201 shown in FIG. 2. Based on the content described in step 201, it should be additionally noted herein that important parameters of the trigger condition for reporting a network idleness measurement event may be a network idleness reporting threshold Thresh_low and a monitoring time T.
602. The vehicular device determines a network congestion indication parameter or a network idleness indication parameter.

It should be noted that the network congestion indication parameter is used to indicate a congestion degree of a network environment of the vehicular device, and the network idleness indication parameter is used to indicate an idleness degree of the network environment of the vehicular device.
603. The vehicular device reports network congestion information to the base station when the network congestion indication parameter meets the trigger condition for reporting a network congestion measurement event.

It should be noted that, that the network congestion indication parameter meets the trigger condition for reporting a network congestion measurement event specifically includes one of the following:
vehicle-to-vehicle communication resource usage is greater than or equal to a first threshold in a first time period;
a rate of successfully receiving a vehicle-to-vehicle communication data packet is less than or equal to a second threshold in a first time period; or
duration for waiting to send a vehicle-to-vehicle communication data packet is greater than or equal to a third threshold in a first time period.

For specific processes of the implementations, respectively refer to steps 203, 303, and 403, and details are not described herein again.
604. The vehicular device receives a second periodic status message sending parameter that is sent by the base station according to the network congestion information.
605. The vehicular device sends a periodic status message according to the second periodic status message sending parameter.
606. When the second periodic status message sending parameter reaches a fourth threshold, the vehicular device receives a second system communications parameter sent by the base station.
607. The vehicular device performs reconfiguration according to the second system communications parameter.

It should be noted that, for specific processes of steps 604 to 607, respectively refer to steps 504 to 507 in the embodiment shown in FIG. 5, and details are not described herein again.
608. The vehicular device reports network idleness information to the base station when the network idleness indication parameter meets the trigger condition for reporting a network idleness measurement event.

It should be noted that, that the network idleness indication parameter meets the trigger condition for reporting a network idleness measurement event may include any one of the following three implementations: the vehicle-to-vehicle communication resource usage is less than a sixth threshold in the first time period; the rate of successfully receiving a vehicle-to-vehicle communication data packet is greater than a seventh threshold in the first time period; or the duration for waiting to send a vehicle-to-vehicle communication data packet is less than an eighth threshold in the first time period. In this embodiment, a specific implementation of one of the implementations is used as an example.

For example, the trigger condition for reporting a network idleness measurement event may be as follows: Reporting of a network idleness measurement event is triggered when the vehicle-to-vehicle communication resource usage measured in the monitoring time T is less than the network idleness reporting threshold Thresh_low. To avoid a ping-pong effect, an entering condition of the network idleness measurement event and a leaving condition of the network idleness measurement event may be defined. For example,
the entering condition is:
Ms + Hys < Thresh_low; and
the leaving condition is:
Ms - Hys > Thresh_low, where
Hys is a hysteresis parameter related to the network idleness measurement event, and Ms is a value obtained by the vehicular device by measuring the vehicle-to-vehicle communication resource usage.

Further, after the trigger condition for reporting a network idleness measurement event is met, the vehicular device establishes an RRC connection to the base station, and reports the network idleness information to the base station. The network idleness information includes a CBR and/or a current PSM sending parameter. The CBR may be usage of all PRBs. The PSM sending parameter may include PSM transmit power, a PSM sending period, PSM sending frequency, a PSM transmission rate, a PSM packet size, and the like.
609. The vehicular device receives a third system communications parameter that is sent by the base station according to the network idleness information.
   It should be noted that the third system communications parameter facilitates lowering the network idleness degree in comparison with the second system communications parameter. That the third system communications parameter facilitates lowering the network idleness degree in comparison with the second system communications parameter specifically includes one or a combination of the following:
   system communication bandwidth indicated by the third system communications parameter is less than system communication bandwidth indicated by the second system communications parameter; or
   a quantity of configured subframes that is indicated by the third system communications parameter is less than a quantity of configured subframes that is indicated by the second system communications parameter.
610. The vehicular device performs reconfiguration according to the third system communications parameter.

It should be noted that a VDC communications module in the vehicular device reconfigures a V2V communications parameter of the VDC communications module according to the third system communications parameter.

In this embodiment of the present invention, a vehicular device reports network idleness information to a base station when a network idleness indication parameter meets a trigger condition for reporting a network idleness measurement event. The vehicular device receives a third system communications parameter that is sent by the base station according to the network idleness information, and performs reconfiguration according to the third system communications parameter. Therefore, idleness control is performed on network idleness, so that a network idleness problem in the Internet of Vehicles is effectively alleviated to properly use network resources, and stability of an idleness control system is improved.

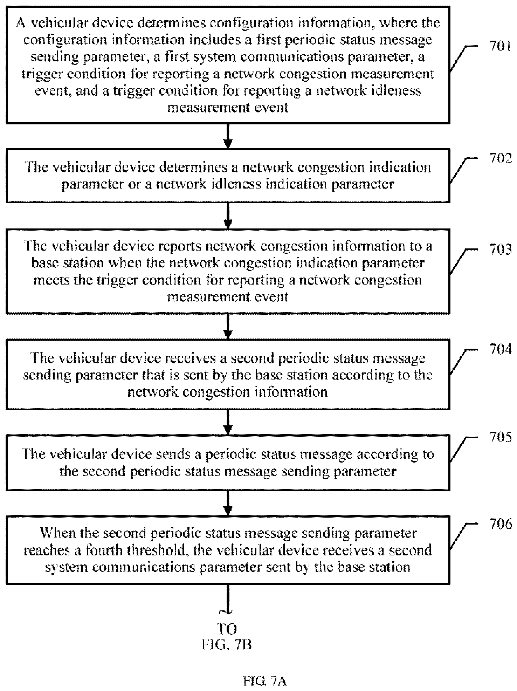

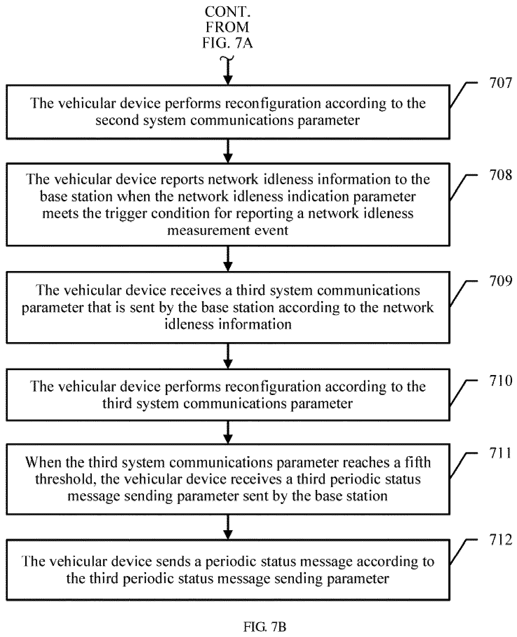

With reference to the communication methods described in the foregoing embodiments, in an embodiment of the present invention, level-2 idleness control specific to a network idleness problem is performed based on level-1 idleness control of network idleness. All the foregoing embodiments can be used in combination with this embodiment of the present invention. To avoid repetition, in this embodiment of the present invention, a related description of the level-2 idleness control specific to the network idleness problem is given with reference to only the embodiment shown in FIG. 6A and FIG. 6B. Referring to FIG. 7A and FIG. 7B, another embodiment of a communication method provided in the present invention includes the following steps.
701. A vehicular device determines configuration information, where the configuration information includes a first periodic status message sending parameter, a first system communications parameter, a trigger condition for reporting a network congestion measurement event, and a trigger condition for reporting a network idleness measurement event.
702. The vehicular device determines a network congestion indication parameter or a network idleness indication parameter.
703. The vehicular device reports network congestion information to the base station when the network congestion indication parameter meets the trigger condition for reporting a network congestion measurement event.
704. The vehicular device receives a second periodic status message sending parameter that is sent by the base station according to the network congestion information.
705. The vehicular device sends a periodic status message according to the second periodic status message sending parameter.
706. When the second periodic status message sending parameter reaches a fourth threshold, the vehicular device receives a second system communications parameter sent by the base station.
707. The vehicular device performs reconfiguration according to the second system communications parameter.
708. The vehicular device reports network idleness information to the base station when the network idleness indication parameter meets the trigger condition for reporting a network idleness measurement event.
709. The vehicular device receives a third system communications parameter that is sent by the base station according to the network idleness information.
710. The vehicular device performs reconfiguration according to the third system communications parameter.

It should be noted that, for specific processes of steps 701 to 710, respectively refer to steps 601 to 610 in the embodiment shown in FIG. 6A and FIG. 6B, and details are not described herein again.
711. When the third system communications parameter reaches a fifth threshold, the vehicular device receives a third periodic status message sending parameter sent by the base station.
   It should be noted that, that the third system communications parameter reaches the fifth threshold includes at least one of the following two cases: system communication bandwidth indicated by the third system communications parameter is decreased to a fifth lower limit value, or a quantity of configured subframes that is indicated by the third system communications parameter is decreased to a sixth lower limit value.
   The third periodic status message sending parameter facilitates lowering a network idleness degree in comparison with the second periodic status message sending parameter. That the third periodic status message sending parameter facilitates lowering a network idleness degree in comparison with the second periodic status message sending parameter specifically includes one or a combination of the following:
   periodic status message transmit power included in the third periodic status message sending parameter is greater than periodic status message transmit power included in the second periodic status message sending parameter;
   a periodic status message sending period included in the third periodic status message sending parameter is less than a periodic status message sending period included in the second periodic status message sending parameter;
   periodic status message sending frequency included in the third periodic status message sending parameter is greater than periodic status message sending frequency included in the second periodic status message sending parameter;
   a periodic status message transmission rate included in the third periodic status message sending parameter is greater than a periodic status message transmission rate included in the second periodic status message sending parameter; or
   a periodic status message length included in the third periodic status message sending parameter is greater than a periodic status message length included in the second periodic status message sending parameter.
712. The vehicular device sends a periodic status message according to the third periodic status message sending parameter.

It should be noted that a VDC communications module in the vehicular device reconfigures a V2V communications parameter of the VDC communications module according to the third PSM sending parameter, and sends the PSM to a surrounding vehicle.

In this embodiment of the present invention, when a third system communications parameter reaches a fifth threshold, a vehicular device receives a third periodic status message sending parameter sent by a base station. The vehicular device sends a periodic status message according to the third periodic status message sending parameter. Therefore, by means of level-2 idleness control, a network idleness problem in the Internet of Vehicles can be effectively alleviated to properly use network resources, and stability of an idleness control system is improved.

Optionally, the trigger condition for reporting a network congestion measurement event and the trigger condition for reporting a network idleness measurement event in the foregoing embodiment each can be configured as a periodically triggered measurement event. Specifically, important parameters of the periodically triggered measurement event are a measurement period T_C and a monitoring time T. The vehicular device periodically reports a current network congestion indication parameter or a current network idleness indication parameter to the base station according to the measurement period T_C, and the base station controls a network environment according to the current network congestion indication parameter or the current network idleness indication parameter. For a specific process, refer to the foregoing content, and details are not described herein.

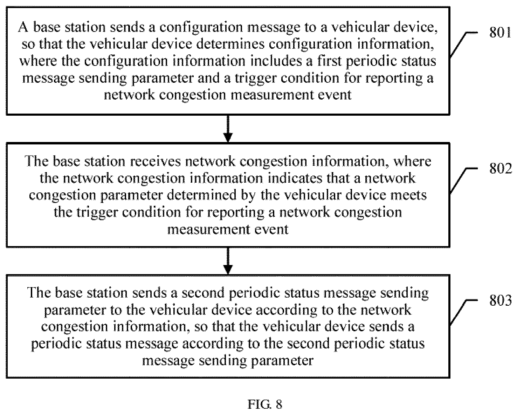

The foregoing describes in detail the communication method on a vehicle device side. The following describes the communication method on a base station side. Referring to FIG. 8, another embodiment of a communication method provided in the present invention includes the following steps.
801. A base station sends a configuration message to a vehicular device, so that the vehicular device determines configuration information, where the configuration information includes a first periodic status message sending parameter and a trigger condition for reporting a network congestion measurement event.

It should be noted that the configuration information includes the first PSM sending parameter and the trigger condition for reporting a network congestion measurement event. To ensure safe running of vehicles, status information needs to be periodically exchanged between the vehicles by using a VDC interface. The exchanged status information is referred to as a BSM in America, is referred to as a CAM in Europe, and is collectively referred to as a PSM herein. The PSM may be understood as a "heartbeat packet" of a vehicle. The PSM sending parameter includes information such as a location of the vehicle, a speed of the vehicle, and a status of the vehicle, and is broadcast to a surrounding vehicle in a single-hop manner, usually, at frequency of 100 ms per time. By analyzing a received PSM sending parameter of the surrounding vehicle, an imminent danger may be determined and warned of, so as to reduce occurrence of disasters. That a base station sends a configuration message to a vehicular device specifically includes one of the following:
sending, by the base station, the configuration message to the vehicular device by means of system broadcast; or
sending, by the base station, the configuration message to the vehicular device by using radio resource control dedicated signaling.

Communication may be performed by setting a corresponding function module in the vehicular device. Specifically, two communications modules are mounted on the vehicular device. One is a conventional LTE communications module used for communication and information exchange between a vehicle and a base station. The other is a VDC communications module used for direct communication between vehicles (during which a message is not forwarded by the base station). An operating band of the VDC communications module may be a dedicated spectrum for vehicle direct communication, may be a conventional LTE spectrum, or may be an unlicensed spectrum. In addition, a communications technology of the VDC communications module may be a communications technology of 802.11p currently used in Europe and America, or may be a VDC communications technology designed based on LTE. In this embodiment of the present invention, the VDC communications module configures the V2V communications parameter of the VDC communications module and a network congestion measurement event according to a system broadcast message received by the LTE communications module, and performs V2V communication with another vehicle.
802. The base station receives network congestion information, where the network congestion information indicates that a network congestion parameter determined by the vehicular device meets the trigger condition for reporting a network congestion measurement event.

It should be noted that the network congestion indication parameter is used to indicate a congestion degree of a network environment of the vehicular device. That the network congestion indication parameter meets the trigger condition for reporting a network congestion measurement event specifically includes one of the following:
vehicle-to-vehicle communication resource usage is greater than or equal to a first threshold in a first time period;
a rate of successfully receiving a vehicle-to-vehicle communication data packet is less than or equal to a second threshold in a first time period; or
duration for waiting to send a vehicle-to-vehicle communication data packet is greater than or equal to a third threshold in a first time period.

In this embodiment of the present invention, a specific implementation of one of the implementations is used as an example.

Important parameters of the trigger condition for reporting a network congestion measurement event may be a network congestion reporting threshold Thresh_high and a monitoring time T. For example, the trigger condition for reporting a network congestion measurement event may be as follows: Reporting of a network congestion measurement event is triggered when the vehicle-to-vehicle communication resource usage measured in the monitoring time T is greater than or equal to the network congestion reporting threshold Thresh_high. To avoid a ping-pong effect, an entering condition of the network congestion measurement event and a leaving condition of the network congestion measurement event may be defined. For example,
the entering condition is:
Ms - Hys > Thresh_high; and
the leaving condition is:
Ms + Hys < Thresh_high, where
Hys is a hysteresis parameter related to the network congestion measurement event, and Ms is a value obtained by the vehicular device by measuring the vehicle-to-vehicle communication resource usage.

Further, after the trigger condition for reporting a network congestion measurement event is met, the base station establishes an RRC connection to the vehicular device, and receives the network congestion information sent by the vehicular device. The network congestion information includes a CBR and/or a current PSM sending parameter. The CBR may be usage of all PRBs. The PSM sending parameter may include PSM transmit power, a PSM sending period, PSM sending frequency, a PSM transmission rate, a PSM packet size, and the like.
803. The base station sends a second periodic status message sending parameter to the vehicular device according to the network congestion information, so that the vehicular device sends a periodic status message according to the second periodic status message sending parameter.

It should be noted that the second periodic status message sending parameter facilitates lowering the network congestion degree in comparison with the first periodic status message sending parameter. That the second periodic status message sending parameter facilitates lowering the network congestion degree in comparison with the first periodic status message sending parameter specifically includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

It may be understood that the second periodic status message sending parameter may be information that is sent by the base station by means of system broadcast and that is about reconfiguring a first PSM sending parameter used for collective congestion control of vehicles in a cell, or information that is sent by using RRC dedicated signaling and that is about reconfiguring a first PSM sending parameter used for separate congestion control of a specified vehicle in a cell.

The VDC communications module in the vehicular device reconfigures a V2V communications parameter of the VDC communications module according to the second PSM sending parameter, and sends the PSM to a surrounding vehicle.

In this embodiment of the present invention, a base station sends a configuration message to a vehicular device, so that the vehicular device determines configuration information. The base station receives network congestion information, and sends a second periodic status message sending parameter to the vehicular device according to the network congestion information, so that the vehicular device sends a periodic status message according to the second periodic status message sending parameter. Therefore, global congestion control is performed on network congestion, so as to effectively alleviate a network congestion problem in the Internet of Vehicles, and improve stability of a congestion control system.

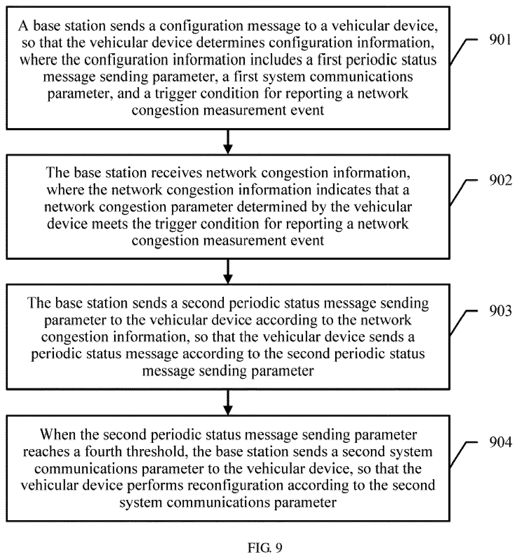

To more comprehensively resolve a network congestion problem, with reference to the communication methods described in the foregoing embodiments, in an embodiment of the present invention, level-2 congestion control specific to the network congestion problem is performed based on level-1 congestion control of network congestion. The following gives a related description of the level-2 congestion control specific to the network congestion problem. Referring to FIG. 9, another embodiment of a communication method provided in the present invention includes the following steps.
901. A base station sends a configuration message to a vehicular device, so that the vehicular device determines configuration information, where the configuration information includes a first periodic status message sending parameter, a first system communications parameter, and a trigger condition for reporting a network congestion measurement event.

It should be noted that, for a specific process of step 901, correspondingly refer to step 801 shown in FIG. 8. Based on the content described in step 801, it should be additionally noted herein that the first system communications parameter includes system communication bandwidth and/or a quantity of configured subframes.
902. The base station receives network congestion information, where the network congestion information indicates that a network congestion parameter determined by the vehicular device meets the trigger condition for reporting a network congestion measurement event.
903. The base station sends a second periodic status message sending parameter to the vehicular device according to the network congestion information, so that the vehicular device sends a periodic status message according to the second periodic status message sending parameter.

It should be noted that, for specific processes of steps 902 and 903, respectively refer to steps 802 and 803 in the embodiment shown in FIG. 8, and details are not described herein again.
904. When the second periodic status message sending parameter reaches a fourth threshold, the base station sends a second system communications parameter to the vehicular device, so that the vehicular device performs reconfiguration according to the second system communications parameter.

It should be noted that when the second PSM sending parameter reaches the fourth threshold after the second PSM sending parameter is adjusted, the base station sends the second system communications parameter to the vehicular device, so that a VDC communications module in the vehicular device reconfigures a V2V communications parameter of the VDC communications module according to the second system communications parameter. That the second periodic status message sending parameter reaches the fourth threshold includes at least one of the following five cases: second periodic status message transmit power is decreased to a first lower limit value, a second periodic status message sending period is increased to a first upper limit value, second periodic status message sending frequency is decreased to a second lower limit value, a second periodic status message transmission rate is decreased to a third lower limit value, or a second periodic status message size is decreased to a fourth lower limit value.

The second system communications parameter facilitates lowering a network congestion degree in comparison with the first system communications parameter. That the second system communications parameter facilitates lowering a network congestion degree in comparison with the first system communications parameter specifically includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

The second system communications parameter may be information that is sent by the base station by means of system broadcast and that is about reconfiguring a first system communications parameter used for collective congestion control of vehicles in a cell, or information that is sent by using RRC dedicated signaling and that is about reconfiguring a first system communications parameter used for separate congestion control of a specified vehicle in a cell.

In this embodiment of the present invention, when a second periodic status message sending parameter reaches a fourth threshold, a base station sends a second system communications parameter to a vehicular device, so that the vehicular device performs reconfiguration according to the second system communications parameter. Therefore, by means of level-2 congestion control, a network congestion problem in the Internet of Vehicles can be effectively alleviated, and stability of a congestion control system is improved.

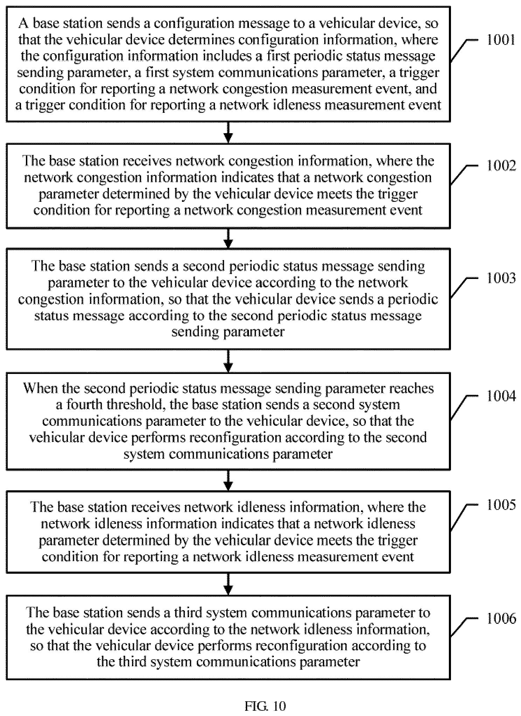

To properly use network resources, with reference to the communication methods described in the foregoing embodiments, a related description of joint control specific to a network congestion problem and a network idleness problem is given in an embodiment of the present invention. Referring to FIG. 10, another embodiment of a communication method provided in the present invention includes the following steps.
1001. A base station sends a configuration message to a vehicular device, so that the vehicular device determines configuration information, where the configuration information includes a first periodic status message sending parameter, a first system communications parameter, a trigger condition for reporting a network congestion measurement event, and a trigger condition for reporting a network idleness measurement event.

It should be noted that, for a specific process of step 1001, correspondingly refer to step 901 shown in FIG. 9. Based on the content described in step 901, it should be additionally noted herein that important parameters of the trigger condition for reporting a network idleness measurement event may be a network idleness reporting threshold Thresh_low and a monitoring time T.
1002. The base station receives network congestion information, where the network congestion information indicates that a network congestion parameter determined by the vehicular device meets the trigger condition for reporting a network congestion measurement event.
1003. The base station sends a second periodic status message sending parameter to the vehicular device according to the network congestion information, so that the vehicular device sends a periodic status message according to the second periodic status message sending parameter.
1004. When the second periodic status message sending parameter reaches a fourth threshold, the base station sends a second system communications parameter to the vehicular device, so that the vehicular device performs reconfiguration according to the second system communications parameter.

It should be noted that, for specific processes of steps 1002 to 1004, respectively refer to steps 902 to 904 in the embodiment shown in FIG. 9, and details are not described herein again.
1005. The base station receives network idleness information, where the network idleness information indicates that a network idleness parameter determined by the vehicular device meets the trigger condition for reporting a network idleness measurement event.

It should be noted that the network idleness indication parameter is used to indicate an idleness degree of a network environment of the vehicular device. That the network idleness indication parameter meets the trigger condition for reporting a network idleness measurement event specifically includes one of the following:
vehicle-to-vehicle communication resource usage is less than a sixth threshold in a first time period;
a rate of successfully receiving a vehicle-to-vehicle communication data packet is greater than a seventh threshold in a first time period; or
duration for waiting to send a vehicle-to-vehicle communication data packet is less than an eighth threshold in a first time period.

In this embodiment, a specific implementation of one of the implementations is used as an example.

For example, the trigger condition for reporting a network idleness measurement event may be as follows: Reporting of a network idleness measurement event is triggered when the vehicle-to-vehicle communication resource usage measured in the monitoring time T is less than the network idleness reporting threshold Thresh_low. To avoid a ping-pong effect, an entering condition of the network idleness measurement event and a leaving condition of the network idleness measurement event may be defined. For example,
the entering condition is:
Ms + Hys < Thresh_low; and
the leaving condition is:
Ms - Hys > Thresh_low, where
Hys is a hysteresis parameter related to the network idleness measurement event, and Ms is a value obtained by the vehicular device by measuring the vehicle-to-vehicle communication resource usage.

Further, after the trigger condition for reporting a network idleness measurement event is met, the base station establishes an RRC connection to the vehicular device, and receives the network idleness information sent by the vehicular device. The network idleness information includes a CBR and/or a current PSM sending parameter. The CBR may be usage of all PRBs. The PSM sending parameter may include PSM transmit power, a PSM sending period, PSM sending frequency, a PSM transmission rate, a PSM packet size, and the like.

1006. The base station sends a third system communications parameter to the vehicular device according to the network idleness information, so that the vehicular device performs reconfiguration according to the third system communications parameter.

It should be noted that the base station sends the third system communications parameter to the vehicular device according to the network idleness information, so that a VDC communications module in the vehicular device reconfigures a V2V communications parameter of the VDC communications module according to the third system communications parameter. The third system communications parameter facilitates lowering the network idleness degree in comparison with the second system communications parameter. That the third system communications parameter facilitates lowering the network idleness degree in comparison with the second system communications parameter specifically includes one or a combination of the following:
system communication bandwidth indicated by the third system communications parameter is less than system communication bandwidth indicated by the second system communications parameter; or
a quantity of configured subframes that is indicated by the third system communications parameter is less than a quantity of configured subframes that is indicated by the second system communications parameter.

In this embodiment of the present invention, a base station receives network idleness information, and sends a third system communications parameter to a vehicular device according to the network idleness information, so that the vehicular device performs reconfiguration according to the third system communications parameter. Therefore, idleness control is performed on network idleness, so that a network idleness problem in the Internet of Vehicles is effectively alleviated to properly use network resources, and stability of an idleness control system is improved.

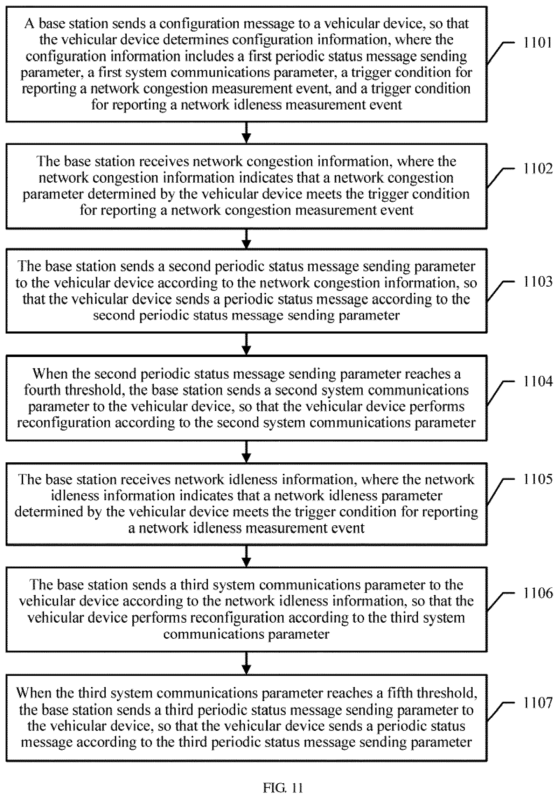

With reference to the communication methods described in the foregoing embodiments, in an embodiment of the present invention, level-2 idleness control specific to a network idleness problem is performed based on level-1 idleness control of network idleness. The following gives a related description of the level-2 idleness control specific to the network idleness problem. Referring to FIG. 11, another embodiment of a communication method provided in the present invention includes the following steps.
1101. A base station sends a configuration message to a vehicular device, so that the vehicular device determines configuration information, where the configuration information includes a first periodic status message sending parameter, a first system communications parameter, a trigger condition for reporting a network congestion measurement event, and a trigger condition for reporting a network idleness measurement event.
1102. The base station receives network congestion information, where the network congestion information indicates that a network congestion parameter determined by the vehicular device meets the trigger condition for reporting a network congestion measurement event.
1103. The base station sends a second periodic status message sending parameter to the vehicular device according to the network congestion information, so that the vehicular device sends a periodic status message according to the second periodic status message sending parameter.
1104. When the second periodic status message sending parameter reaches a fourth threshold, the base station sends a second system communications parameter to the vehicular device, so that the vehicular device performs reconfiguration according to the second system communications parameter.
1105. The base station receives network idleness information, where the network idleness information indicates that a network idleness parameter determined by the vehicular device meets the trigger condition for reporting a network idleness measurement event.
1106. The base station sends a third system communications parameter to the vehicular device according to the network idleness information, so that the vehicular device performs reconfiguration according to the third system communications parameter.

It should be noted that, for specific processes of steps 1101 to 1106, respectively refer to steps 1001 to 1006 in the embodiment shown in FIG. 10, and details are not described herein again.
1107. When the third system communications parameter reaches a fifth threshold, the base station sends a third periodic status message sending parameter to the vehicular device, so that the vehicular device sends a periodic status message according to the third periodic status message sending parameter.

It should be noted that when the third system communications parameter reaches the fifth threshold, the base station sends the third periodic status message sending parameter to the vehicular device, so that a VDC communications module in the vehicular device reconfigures a V2V communications parameter of the VDC communications module according to the third PSM sending parameter, and sends the PSM to a surrounding vehicle. That the third system communications parameter reaches the fifth threshold includes at least one of the following two cases: system communication bandwidth indicated by the third system communications parameter is decreased to a fifth lower limit value, or a quantity of configured subframes that is indicated by the third system communications parameter is decreased to a sixth lower limit value.

The third periodic status message sending parameter facilitates lowering a network idleness degree in comparison with the second periodic status message sending parameter. That the third periodic status message sending parameter facilitates lowering a network idleness degree in comparison with the second periodic status message sending parameter specifically includes one or a combination of the following:
periodic status message transmit power included in the third periodic status message sending parameter is greater than periodic status message transmit power included in the second periodic status message sending parameter;
a periodic status message sending period included in the third periodic status message sending parameter is less than a periodic status message sending period included in the second periodic status message sending parameter;
periodic status message sending frequency included in the third periodic status message sending parameter is greater than periodic status message sending frequency included in the second periodic status message sending parameter;
a periodic status message transmission rate included in the third periodic status message sending parameter is greater than a periodic status message transmission rate included in the second periodic status message sending parameter; or
a periodic status message length included in the third periodic status message sending parameter is greater than a periodic status message length included in the second periodic status message sending parameter.

In this embodiment of the present invention, when a third system communications parameter reaches a fifth threshold, a base station sends a third periodic status message sending parameter to a vehicular device, so that the vehicular device sends a periodic status message according to the third periodic status message sending parameter. Therefore, by means of level-2 idleness control, a network idleness problem in the Internet of Vehicles can be effectively alleviated to properly use network resources, and stability of an idleness control system is improved.

Optionally, the trigger condition for reporting a network congestion measurement event and the trigger condition for reporting a network idleness measurement event in the foregoing embodiment each can be configured as a periodically triggered measurement event. Specifically, important parameters of the periodically triggered measurement event are a measurement period T_C and a monitoring time T. The vehicular device periodically reports a current network congestion indication parameter or a current network idleness indication parameter to the base station according to the measurement period T_C, and the base station controls a network environment according to the current network congestion indication parameter or the current network idleness indication parameter. For a specific process, refer to the foregoing content, and details are not described herein.

For ease of understanding, the following describes in detail the communication method in the embodiments of the present invention by using a specific application scenario.

It is assumed that the vehicular device is mounted on a vehicle. The vehicular device has two communications modules. One is a conventional LTE communications module used for communication and information exchange between the vehicle and a base station. The other is a VDC communications module used for direct communication between vehicles. An operating band of the VDC communications module may be a dedicated spectrum for vehicle direct communication, may be a conventional LTE spectrum, or may be an unlicensed spectrum. In addition, a communications technology of the VDC communications module may be a communications technology of 802.11p currently used in Europe and America, or may be a VDC communications technology designed based on LTE.

First, the vehicle receives, by using the LTE communications module, a configuration message sent by the base station. The configuration message may include a PSM sending parameter, system communication bandwidth, subframe configuration, configuration of a trigger condition for reporting a network congestion measurement event, configuration of a trigger condition for reporting a network idleness measurement event, and the like. Specifically, important parameters of the trigger condition for reporting a network congestion measurement event are a network congestion reporting threshold Thresh_high and a monitoring time T, and important parameters of the trigger condition for reporting a network idleness measurement event are a network idleness reporting threshold Thresh_low and a monitoring time T.

The vehicle configures, by using the VDC communications module and according to the configuration message received by the LTE communications module, the V2V communications parameter of the VDC communications module, the trigger condition for reporting a network congestion measurement event, and the trigger condition for reporting a network idleness measurement event, and performs V2V communication with another vehicle.

The vehicle measures vehicle-to-vehicle communication resource usage, and detects whether the trigger condition for reporting a network congestion measurement event is met, or whether the trigger condition for reporting a network idleness measurement event is met.

In this scenario, the trigger condition for reporting a network congestion measurement event is used as an example for description. Specifically, for example, the trigger condition for reporting a network congestion measurement event is as follows: Reporting of a network congestion measurement event is triggered when the vehicle-to-vehicle communication resource usage measured by the vehicular device in the vehicle in the monitoring time T is greater than or equal to the network congestion reporting threshold Thresh_high. To avoid a ping-pong effect, an entering condition of the network congestion measurement event and a leaving condition of the network congestion measurement event may be defined. For example,
the entering condition is:
Ms - Hys > Thresh_high; and
the leaving condition is:
Ms + Hys < Thresh_high, where
Hys is a hysteresis parameter related to the network congestion measurement event, and Ms is a value obtained by the vehicular device by measuring the vehicle-to-vehicle communication resource usage.

After the configured trigger condition for reporting a network congestion measurement event is met, the vehicular device in the vehicle enables an RRC connection process, and establishes an RRC connection to the base station. After establishing the RRC connection to the base station, the vehicular device in the vehicle reports a CBR and/or a current PSM sending parameter to the base station. The CBR may be usage of all PRBs. The PSM sending parameter may include PSM transmit power, a PSM sending period, PSM sending frequency, a PSM transmission rate, a PSM packet size, and the like.

After receiving the CBR and the current PSM sending parameter that are reported by the vehicle in a cell, the base station comprehensively considers a load status of a V2V communication resource in the cell, and determines whether to perform network congestion control. Specifically, the base station first adjusts the PSM sending parameter. An adjustment process may include: decreasing periodic status message transmit power, increasing a periodic status message sending period, decreasing periodic status message sending frequency, decreasing a periodic status message transmission rate, decreasing a periodic status message size, and the like.

The base station sends an adjusted PSM sending parameter to vehicles within coverage of the cell by using a system broadcast message, so as to perform collective congestion control, or sends an adjusted PSM sending parameter to a specified vehicle in the cell by using RRC dedicated signaling, so as to perform separate congestion control. The LTE communications module in the vehicle receives the PSM sending parameter that is obtained by the base station after the adjustment and that is delivered by the base station. The VDC communications module in the vehicle reconfigures a V2V communications parameter of the VDC communications module according to the adjusted PSM sending parameter received by the LTE communications module, and sends a PSM to a surrounding vehicle. Therefore, a network congestion problem in the Internet of Vehicles is effectively alleviated.

When a value obtained by the base station by adjusting the PSM sending parameter of the vehicle in the cell reaches an upper adjustment limit value, the base station comprehensively considers a load status of the V2V communication resource in the cell, and determines whether to perform level-2 network congestion control. Specifically, the base station adjusts a system communications parameter. An adjustment process may include: increasing the system communication bandwidth, increasing the subframe configuration, and the like.

The base station sends an adjusted system communications parameter to the vehicles within coverage of the cell by using a system broadcast message, so as to perform level-2 collective congestion control, or sends an adjusted system communications parameter to the specified vehicle in the cell by using RRC dedicated signaling, so as to perform level-2 separate congestion control. The LTE communications module in the vehicle receives the system communications parameter that is obtained by the base station after the adjustment and that is delivered by the base station. The VDC communications module in the vehicle reconfigures a V2V communications parameter of the VDC communications module according to the adjusted system communications parameter received by the LTE communications module. Therefore, the network congestion problem in the Internet of Vehicles is effectively alleviated.

Likewise, the trigger condition for reporting a network idleness measurement event is used as an example. Specifically, for example, the trigger condition for reporting a network idleness measurement event is as follows: Reporting of a network idleness measurement event is triggered when the vehicle-to-vehicle communication resource usage measured by the vehicular device in the vehicle in the monitoring time T is less than the network idleness reporting threshold Thresh_low. To avoid a ping-pong effect, an entering condition of the network idleness measurement event and a leaving condition of the network idleness measurement event may be defined. For example,
the entering condition is:
Ms + Hys < Thresh_low; and
the leaving condition is:
Ms - Hys > Thresh_low, where
Hys is a hysteresis parameter related to the network idleness measurement event, and Ms is a value obtained by the vehicular device by measuring the vehicle-to-vehicle communication resource usage.

After the configured trigger condition for reporting a network idleness measurement event is met, the vehicular device in the vehicle enables an RRC connection process, and establishes an RRC connection to the base station. After establishing the RRC connection to the base station, the vehicular device in the vehicle reports a CBR and/or a current PSM sending parameter to the base station. The CBR may be usage of all PRBs. The PSM sending parameter may include PSM transmit power, a PSM sending period, PSM sending frequency, a PSM transmission rate, a PSM packet size, and the like.

After receiving the CBR and the current PSM sending parameter that are reported by the vehicle in a cell, the base station comprehensively considers a load status of a V2V communication resource in the cell, and determines whether to perform network idleness control. Specifically, the base station first adjusts a system communications parameter. An adjustment process may include: decreasing the system communications bandwidth, decreasing the quantity of configured subframes, and the like.

The base station sends an adjusted system communications parameter to vehicles within coverage of the cell by using a system broadcast message, so as to perform collective network idleness control, or sends an adjusted system communications parameter to a specified vehicle in the cell by using RRC dedicated signaling, so as to perform separate network idleness control. The LTE communications module in the vehicle receives the system communications parameter that is obtained by the base station after the adjustment and that is delivered by the base station. The VDC communications module in the vehicle reconfigures a V2V communications parameter of the VDC communications module according to the adjusted system communications parameter received by the LTE communications module. Therefore, a network idleness problem in the Internet of Vehicles is effectively alleviated to properly use network resources.

When a value obtained by the base station by adjusting the system communications parameter reaches a lower adjustment limit value, the base station comprehensively considers a load status of the V2V communication resource in the cell, and determines whether to perform level-2 network idleness control. Specifically, the base station adjusts the PSM sending parameter. An adjustment process may include: increasing periodic status message transmit power, decreasing a periodic status message sending period, increasing periodic status message sending frequency, increasing a periodic status message transmission rate, increasing a periodic status message size, and the like.

The base station sends an adjusted PSM sending parameter to the vehicles within coverage of the cell by using a system broadcast message, so as to perform collective network idleness control, or sends the adjusted PSM sending parameter to the specified vehicle in the cell by using RRC dedicated signaling, so as to perform separate network idleness control. The LTE communications module in the vehicle receives the PSM sending parameter that is obtained by the base station after the adjustment and that is delivered by the base station. The VDC communications module in the vehicle reconfigures a V2V communications parameter of the VDC communications module according to the adjusted PSM sending parameter received by the LTE communications module, and sends a PSM to a surrounding vehicle. Therefore, the network idleness problem in the Internet of Vehicles is effectively alleviated to properly use network resources.

In actual application, the trigger condition for reporting a network congestion measurement event and the trigger condition for reporting a network idleness measurement event each can be configured as a periodically triggered measurement event. Specifically, important parameters of the periodically triggered measurement event are a measurement period T_C and a monitoring time T. The vehicular device periodically reports a current network congestion indication parameter or a current network idleness indication parameter to the base station according to the measurement period T_C, and the base station controls a network environment according to the current network congestion indication parameter or the current network idleness indication parameter. For example, a timer is set in the vehicular device, and the timer has specified duration of 30 seconds. The vehicular device reports a CBR and/or a current PSM sending parameter to the base station every 30 seconds. After receiving the CBR and the current PSM sending parameter that are reported by the vehicle in the cell, the base station comprehensively considers a load status of a V2V communication resource in the cell, and determines whether to perform network congestion control or network idleness control. A specific process is not described herein again.

To better execute the communication method in the embodiments of the present invention, the following further provides a related apparatus used to execute the communication method.

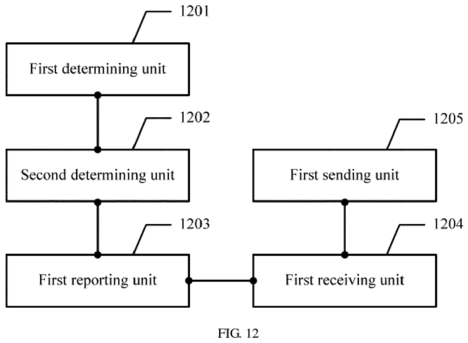

Referring to FIG. 12, an embodiment of a vehicular device provided in the present invention includes:
a first determining unit 1201, configured to determine configuration information, where the configuration information includes a first periodic status message sending parameter and a trigger condition for reporting a network congestion measurement event;
a second determining unit 1202, configured to determine a network congestion indication parameter, where the network congestion indication parameter is used to indicate a congestion degree of a network environment of the vehicular device;
a first reporting unit 1203, configured to report network congestion information to the base station when the network congestion indication parameter meets the trigger condition for reporting a network congestion measurement event;
a first receiving unit 1204, configured to receive a second periodic status message sending parameter that is sent by the base station according to the network congestion information, where the second periodic status message sending parameter facilitates lowering the network congestion degree in comparison with the first periodic status message sending parameter; and
a first sending unit 1205, configured to send a periodic status message according to the second periodic status message sending parameter.

It should be noted that, that the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

Further, the first determining unit 1201 is specifically configured to receive a configuration message that is sent by the base station by means of system broadcast, so as to determine the configuration information; or
the first determining unit 1201 is specifically configured to receive a configuration message that is sent by the base station by using radio resource control dedicated signaling, so as to determine the configuration information; or
the first determining unit 1201 is specifically configured to determine the configuration information by means of preconfiguration.

That the network congestion indication parameter meets the trigger condition for reporting a network congestion measurement event specifically includes one of the following:
vehicle-to-vehicle communication resource usage is greater than or equal to a first threshold in a first time period;
a rate of successfully receiving a vehicle-to-vehicle communication data packet is less than or equal to a second threshold in a first time period; or
duration for waiting to send a vehicle-to-vehicle communication data packet is greater than or equal to a third threshold in a first time period.

Herein, one of the implementations is used as an example for specific description.

For example, the trigger condition for reporting a network congestion measurement event may be as follows: Reporting of a network congestion measurement event is triggered when the vehicle-to-vehicle communication resource usage measured in a monitoring time T is greater than or equal to a network congestion reporting threshold Thresh_high. To avoid a ping-pong effect, an entering condition of the network congestion measurement event and a leaving condition of the network congestion measurement event may be defined. For example,
the entering condition is:
Ms - Hys > Thresh_high; and
the leaving condition is:
Ms + Hys < Thresh_high, where
Hys is a hysteresis parameter related to the network congestion measurement event, and Ms is a value obtained by the vehicular device by measuring the vehicle-to-vehicle communication resource usage.

In this embodiment of the present invention, a first reporting unit 1203 reports network congestion information to a base station when a network congestion indication parameter meets a trigger condition for reporting a network congestion measurement event. A first receiving unit 1204 receives a second periodic status message sending parameter that is sent by the base station according to the network congestion information. The second periodic status message sending parameter facilitates lowering a network congestion degree in comparison with a first periodic status message sending parameter. A first sending unit 1205 sends a periodic status message according to the second periodic status message sending parameter. Therefore, global congestion control is performed on network congestion, so as to effectively alleviate a network congestion problem in the Internet of Vehicles, and improve stability of a congestion control system.

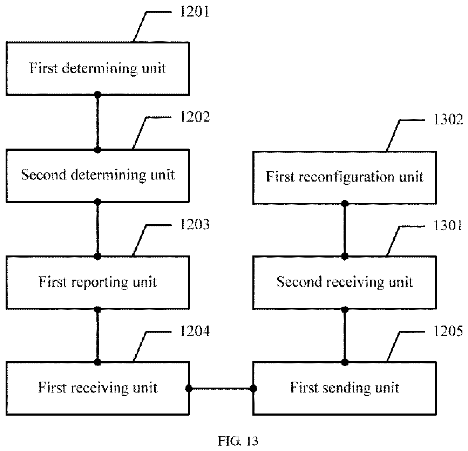

Based on the vehicular device in the foregoing embodiment, optionally, the configuration information further includes a first system communications parameter. The first system communications parameter includes system communication bandwidth and/or a quantity of configured subframes. As shown in FIG. 13, the vehicular device further includes:
a second receiving unit 1301, configured to: when the second periodic status message sending parameter reaches a fourth threshold, receive a second system communications parameter sent by the base station, where the second system communications parameter facilitates lowering the network congestion degree in comparison with the first system communications parameter; and
a first reconfiguration unit 1302, configured to perform reconfiguration according to the second system communications parameter.

It should be noted that, that the second system communications parameter facilitates lowering the network congestion degree in comparison with the first system communications parameter includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

That the second periodic status message sending parameter reaches the fourth threshold includes at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

In this embodiment of the present invention, when a second periodic status message sending parameter reaches a fourth threshold, a second receiving unit 1301 receives a second system communications parameter sent by a base station. A first reconfiguration unit 1302 performs reconfiguration according to the second system communications parameter. Therefore, by means of level-2 congestion control, a network congestion problem in the Internet of Vehicles can be effectively alleviated, and stability of a congestion control system is improved.

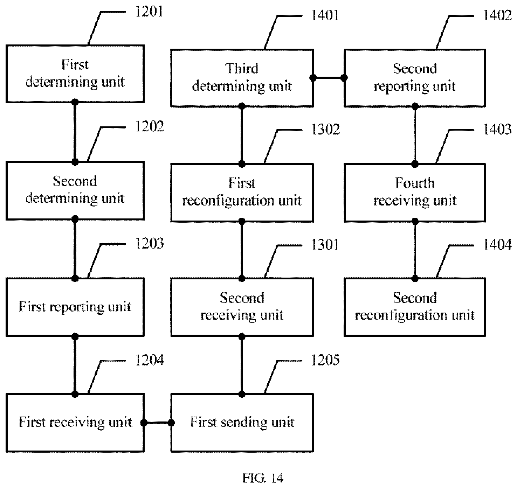

Based on the vehicular device in the foregoing embodiments, optionally, as shown in FIG. 14, the vehicular device further includes:
a third determining unit 1401, configured to determine a network idleness indication parameter, where the network idleness indication parameter is used to indicate an idleness degree of the network environment of the vehicular device;
a second reporting unit 1402, configured to report network idleness information to the base station when the network idleness indication parameter meets the trigger condition for reporting a network idleness measurement event;
a fourth receiving unit 1403, configured to receive a third system communications parameter that is sent by the base station according to the network idleness information, where the third system communications parameter facilitates lowering the network idleness degree in comparison with the second system communications parameter; and
a second reconfiguration unit 1404, configured to perform reconfiguration according to the third system communications parameter.

It should be noted that, that the network idleness indication parameter meets the trigger condition for reporting a network idleness measurement event may include any one of the following three implementations:
the vehicle-to-vehicle communication resource usage is less than a sixth threshold in the first time period;
the rate of successfully receiving a vehicle-to-vehicle communication data packet is greater than a seventh threshold in the first time period; or
the duration for waiting to send a vehicle-to-vehicle communication data packet is less than an eighth threshold in the first time period.

Herein, a specific implementation of one of the implementations is used as an example.

For example, the trigger condition for reporting a network idleness measurement event may be as follows: Reporting of a network idleness measurement event is triggered when the vehicle-to-vehicle communication resource usage measured in a monitoring time T is less than a network idleness reporting threshold Thresh_low. To avoid a ping-pong effect, an entering condition of the network idleness measurement event and a leaving condition of the network idleness measurement event may be defined. For example,
the entering condition is:
Ms + Hys < Thresh_low; and
the leaving condition is:
Ms - Hys > Thresh_low, where
Hys is a hysteresis parameter related to the network idleness measurement event, and Ms is a value obtained by the vehicular device by measuring the vehicle-to-vehicle communication resource usage.

In this embodiment of the present invention, a second reporting unit 1402 reports network idleness information to a base station when a network idleness indication parameter meets a trigger condition for reporting a network idleness measurement event. A fourth receiving unit 1403 receives a third system communications parameter that is sent by the base station according to the network idleness information. The third system communications parameter facilitates lowering a network idleness degree in comparison with a second system communications parameter. A second reconfiguration unit 1404 performs reconfiguration according to the third system communications parameter. Therefore, idleness control is performed on network idleness, so that a network idleness problem in the Internet of Vehicles is effectively alleviated to properly use network resources, and stability of an idleness control system is improved.

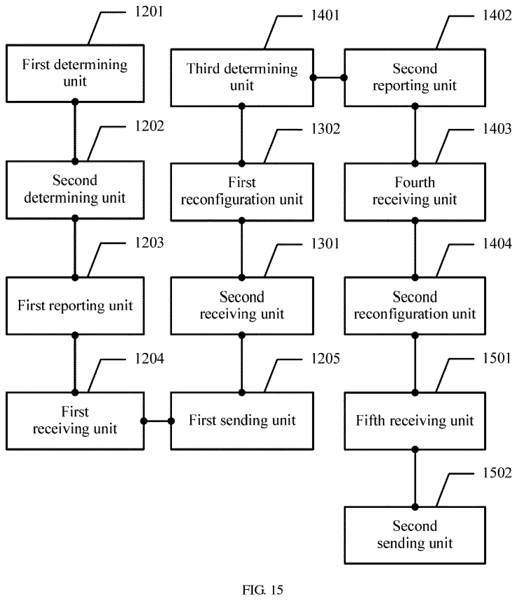

Based on the vehicular device in the foregoing embodiments, optionally, as shown in FIG. 15, the vehicular device further includes:
a fifth receiving unit 1501, configured to: when the third system communications parameter reaches a fifth threshold, receive a third periodic status message sending parameter sent by the base station, where the third periodic status message sending parameter facilitates lowering the network idleness degree in comparison with the second periodic status message sending parameter; and
a second sending unit 1502, configured to send a periodic status message according to the third periodic status message sending parameter.

In this embodiment of the present invention, when a third system communications parameter reaches a fifth threshold, a fifth receiving unit 1501 receives a third periodic status message sending parameter sent by a base station. A second sending unit 1502 sends a periodic status message according to the third periodic status message sending parameter. Therefore, by means of level-2 idleness control, a network idleness problem in the Internet of Vehicles can be effectively alleviated to properly use network resources, and stability of an idleness control system is improved.

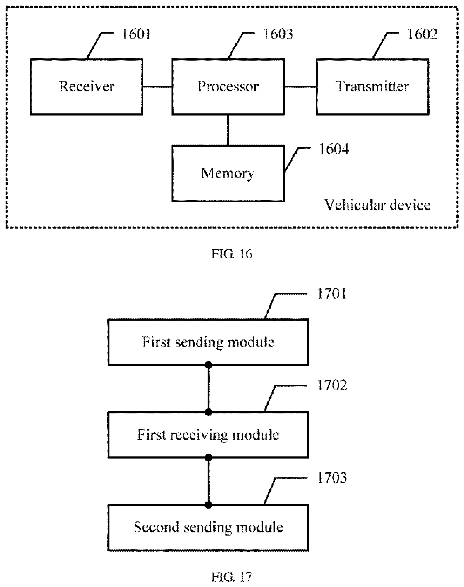

In the embodiments shown in FIG. 12 to FIG. 15, a specific structure of the vehicular device is described from a perspective of a function unit. The following describes the specific structure of the vehicular device from a perspective of hardware with reference to an embodiment shown in FIG. 16.

As shown in FIG. 16, the vehicular device includes a receiver 1601, a transmitter 1602, a processor 1603, and a memory 1604.

The user equipment used in this embodiment of the present invention may have more or fewer components than those shown in FIG. 16, may combine two or more components, or may have different component configurations or settings. Various components may be implemented in hardware including one or more signal processing and/or application-specific integrated circuits, in software, or in a combination of hardware and software.

The processor 1603 is configured to read an instruction stored in the memory 1604, so as to perform the following operations:
determining configuration information, where the configuration information includes a first periodic status message sending parameter and a trigger condition for reporting a network congestion measurement event;
determining a network congestion indication parameter, where the network congestion indication parameter is used to indicate a congestion degree of a network environment of the vehicular device;
reporting network congestion information to the base station when the network congestion indication parameter meets the trigger condition for reporting a network congestion measurement event;
receiving a second periodic status message sending parameter that is sent by the base station according to the network congestion information, where the second periodic status message sending parameter facilitates lowering the network congestion degree in comparison with the first periodic status message sending parameter; and
sending a periodic status message according to the second periodic status message sending parameter.

Optionally, the configuration information further includes a first system communications parameter. The first system communications parameter includes system communication bandwidth and/or a quantity of configured subframes. The processor 1603 is further configured to perform the following operations:
when the second periodic status message sending parameter reaches a fourth threshold, receiving a second system communications parameter sent by the base station, where the second system communications parameter facilitates lowering the network congestion degree in comparison with the first system communications parameter; and
performing reconfiguration according to the second system communications parameter.

Optionally, the configuration information further includes a trigger condition for reporting a network idleness measurement event. The processor 1603 is further configured to perform the following operations:
determining a network idleness indication parameter, where the network idleness indication parameter is used to indicate an idleness degree of the network environment of the vehicular device;
reporting network idleness information to the base station when the network idleness indication parameter meets the trigger condition for reporting a network idleness measurement event;
receiving a third system communications parameter that is sent by the base station according to the network idleness information, where the third system communications parameter facilitates lowering the network idleness degree in comparison with the second system communications parameter; and
performing reconfiguration according to the third system communications parameter.

Optionally, the processor 1603 is further configured to perform the following operations:
when the third system communications parameter reaches a fifth threshold, receiving a third periodic status message sending parameter sent by the base station, where the third periodic status message sending parameter facilitates lowering the network idleness degree in comparison with the second periodic status message sending parameter; and
sending a periodic status message according to the third periodic status message sending parameter.

In this embodiment of the present invention, a processor 1603 reports network congestion information to a base station when a network congestion indication parameter meets a trigger condition for reporting a network congestion measurement event. The processor 1603 receives a second periodic status message sending parameter that is sent by the base station according to the network congestion information, and sends a periodic status message according to the second periodic status message sending parameter. Therefore, global congestion control is performed on network congestion, so as to effectively alleviate a network congestion problem in the Internet of Vehicles, and improve stability of a congestion control system.

The foregoing describes in detail the structure of the vehicular device that executes the communication method. The following gives a related description of a structure of a base station device that executes the communication method. Referring to FIG. 17, an embodiment of the base station device provided in the present invention includes:
a first sending module 1701, configured to send a configuration message to a vehicular device, so that the vehicular device determines configuration information, where the configuration information includes a first periodic status message sending parameter and a trigger condition for reporting a network congestion measurement event;
a first receiving module 1702, configured to receive network congestion information, where the network congestion information indicates that a network congestion parameter determined by the vehicular device meets the trigger condition for reporting a network congestion measurement event, and the network congestion parameter is used to indicate a congestion degree of a network environment of the vehicular device; and
a second sending module 1703, configured to send a second periodic status message sending parameter to the vehicular device according to the network congestion information, so that the vehicular device sends a periodic status message according to the second periodic status message sending parameter, where the second periodic status message sending parameter facilitates lowering the network congestion degree in comparison with the first periodic status message sending parameter.

It should be noted that, that the second periodic status message sending parameter facilitates lowering the network congestion degree in comparison with the first periodic status message sending parameter includes one or a combination of the following:
periodic status message transmit power included in the second periodic status message sending parameter is less than periodic status message transmit power included in the first periodic status message sending parameter;
a periodic status message sending period included in the second periodic status message sending parameter is greater than a periodic status message sending period included in the first periodic status message sending parameter;
periodic status message sending frequency included in the second periodic status message sending parameter is less than periodic status message sending frequency included in the first periodic status message sending parameter;
a periodic status message transmission rate included in the second periodic status message sending parameter is less than a periodic status message transmission rate included in the first periodic status message sending parameter; or
a periodic status message length included in the second periodic status message sending parameter is less than a periodic status message length included in the first periodic status message sending parameter.

Further, the first sending module 1701 is specifically configured to send the configuration message to the vehicular device by means of system broadcast; or
the first sending module 1701 is specifically configured to send the configuration message to the vehicular device by using radio resource control dedicated signaling.

That the network congestion indication parameter meets the trigger condition for reporting a network congestion measurement event specifically includes one of the following:
vehicle-to-vehicle communication resource usage is greater than or equal to a first threshold in a first time period;
a rate of successfully receiving a vehicle-to-vehicle communication data packet is less than or equal to a second threshold in a first time period; or
duration for waiting to send a vehicle-to-vehicle communication data packet is greater than or equal to a third threshold in a first time period.

Herein, one of the implementations is used as an example for specific description.

For example, the trigger condition for reporting a network congestion measurement event may be as follows: Reporting of a network congestion measurement event is triggered when the vehicle-to-vehicle communication resource usage measured in a monitoring time T is greater than or equal to a network congestion reporting threshold Thresh_high. To avoid a ping-pong effect, an entering condition of the network congestion measurement event and a leaving condition of the network congestion measurement event may be defined. For example,
the entering condition is:
Ms - Hys > Thresh_high; and
the leaving condition is:
Ms + Hys < Thresh_high, where
Hys is a hysteresis parameter related to the network congestion measurement event, and Ms is a value obtained by the vehicular device by measuring the vehicle-to-vehicle communication resource usage.

In this embodiment of the present invention, a first sending module 1701 sends a configuration message to a vehicular device, so that the vehicular device determines configuration information. A first receiving module 1702 receives network congestion information. A second sending module 1703 sends a second periodic status message sending parameter to the vehicular device according to the network congestion information, so that the vehicular device sends a periodic status message according to the second periodic status message sending parameter. Therefore, global congestion control is performed on network congestion, so as to effectively alleviate a network congestion problem in the Internet of Vehicles, and improve stability of a congestion control system.

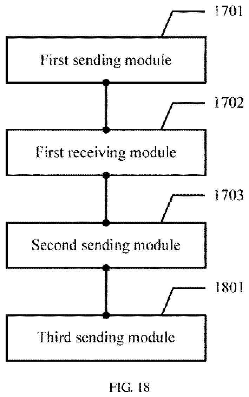

Based on the base station device in the embodiment shown in FIG. 17, optionally, the configuration information further includes a first system communications parameter. The first system communications parameter includes system communication bandwidth and/or a quantity of configured subframes. As shown in FIG. 18, the base station device further includes:
a third sending module 1801, configured to: when the second periodic status message sending parameter reaches a fourth threshold, send a second system communications parameter to the vehicular device, so that the vehicular device performs reconfiguration according to the second system communications parameter, where the second system communications parameter facilitates lowering the network congestion degree in comparison with the first system communications parameter.

It should be noted that, that the second periodic status message sending parameter reaches the fourth threshold includes at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

That the second system communications parameter facilitates lowering the network congestion degree in comparison with the first system communications parameter includes one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

In this embodiment of the present invention, when a second periodic status message sending parameter reaches a fourth threshold, a third sending module 1801 sends a second system communications parameter to a vehicular device, so that the vehicular device performs reconfiguration according to the second system communications parameter. Therefore, by means of level-2 congestion control, a network congestion problem in the Internet of Vehicles can be effectively alleviated, and stability of a congestion control system is improved.

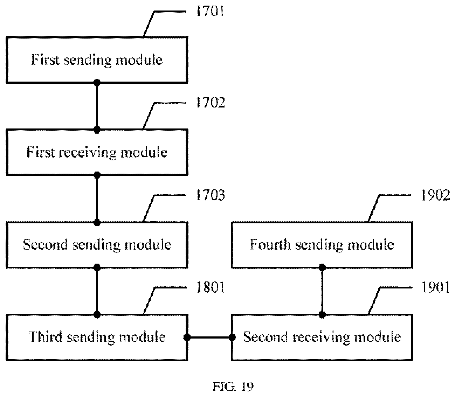

Based on the base station device in the foregoing embodiments, optionally, as shown in FIG. 19, the base station device further includes:
a second receiving module 1901, configured to receive network idleness information, where the network idleness information indicates that a network idleness parameter determined by the vehicular device meets the trigger condition for reporting a network idleness measurement event, and the network idleness parameter is used to indicate an idleness degree of the network environment of the vehicular device; and
a fourth sending module 1902, configured to send a third system communications parameter to the vehicular device according to the network idleness information, so that the vehicular device performs reconfiguration according to the third system communications parameter, where the third system communications parameter facilitates lowering the network idleness degree in comparison with the second system communications parameter.

It should be noted that, that the network idleness indication parameter meets the trigger condition for reporting a network idleness measurement event may include any one of the following three implementations:
the vehicle-to-vehicle communication resource usage is less than a sixth threshold in the first time period;
the rate of successfully receiving a vehicle-to-vehicle communication data packet is greater than a seventh threshold in the first time period; or
the duration for waiting to send a vehicle-to-vehicle communication data packet is less than an eighth threshold in the first time period.

Herein, a specific implementation of one of the implementations is used as an example.

For example, the trigger condition for reporting a network idleness measurement event may be as follows: Reporting of a network idleness measurement event is triggered when the vehicle-to-vehicle communication resource usage measured in a monitoring time T is less than a network idleness reporting threshold Thresh_low. To avoid a ping-pong effect, an entering condition of the network idleness measurement event and a leaving condition of the network idleness measurement event may be defined. For example,
the entering condition is:
Ms + Hys < Thresh_low; and
the leaving condition is:
Ms - Hys > Thresh_low, where
Hys is a hysteresis parameter related to the network idleness measurement event, and Ms is a value obtained by the vehicular device by measuring the vehicle-to-vehicle communication resource usage.

In this embodiment of the present invention, a second receiving module 1901 receives network idleness information. A fourth sending module 1902 sends a third system communications parameter to a vehicular device according to the network idleness information, so that the vehicular device performs reconfiguration according to the third system communications parameter. Therefore, idleness control is performed on network idleness, so that a network idleness problem in the Internet of Vehicles is effectively alleviated to properly use network resources, and stability of an idleness control system is improved.

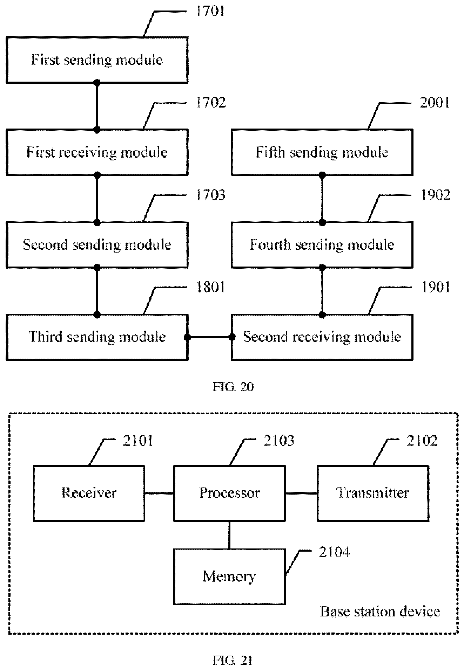

Based on the base station device in the foregoing embodiments, optionally, as shown in FIG. 20, the base station device further includes:
a fifth sending module 2001, configured to: when the third system communications parameter reaches a fifth threshold, send a third periodic status message sending parameter to the vehicular device, so that the vehicular device sends a periodic status message according to the third periodic status message sending parameter, where the third periodic status message sending parameter facilitates lowering the network idleness degree in comparison with the second periodic status message sending parameter.

In this embodiment of the present invention, when a third system communications parameter reaches a fifth threshold, a fifth sending module 2001 sends a third periodic status message sending parameter to a vehicular device, so that the vehicular device sends a periodic status message according to the third periodic status message sending parameter. Therefore, by means of level-2 idleness control, a network idleness problem in the Internet of Vehicles can be effectively alleviated to properly use network resources, and stability of an idleness control system is improved.

In the embodiments shown in FIG. 17 to FIG. 20, a specific structure of the base station device is described from a perspective of a function unit. The following describes the specific structure of the base station device from a perspective of hardware with reference to an embodiment shown in FIG. 21.

As shown in FIG. 21, the base station device includes a receiver 2101, a transmitter 2102, a processor 2103, and a memory 2104.

The user equipment used in this embodiment of the present invention may have more or fewer components than those shown in FIG. 21, may combine two or more components, or may have different component configurations or settings. Various components may be implemented in hardware including one or more signal processing and/or application-specific integrated circuits, in software, or in a combination of hardware and software.

The processor 2103 is configured to read an instruction stored in the memory 2104, so as to perform the following operations:
sending a configuration message to a vehicular device, so that the vehicular device determines configuration information, where the configuration information includes a first periodic status message sending parameter and a trigger condition for reporting a network congestion measurement event;
receiving network congestion information, where the network congestion information indicates that a network congestion parameter determined by the vehicular device meets the trigger condition for reporting a network congestion measurement event, and the network congestion parameter is used to indicate a congestion degree of a network environment of the vehicular device; and
sending a second periodic status message sending parameter to the vehicular device according to the network congestion information, so that the vehicular device sends a periodic status message according to the second periodic status message sending parameter, where the second periodic status message sending parameter facilitates lowering the network congestion degree in comparison with the first periodic status message sending parameter.

Optionally, the configuration information further includes a first system communications parameter. The first system communications parameter includes system communication bandwidth and/or a quantity of configured subframes. The processor 2103 is further configured to perform the following operation:
when the second periodic status message sending parameter reaches a fourth threshold, sending a second system communications parameter to the vehicular device, so that the vehicular device performs reconfiguration according to the second system communications parameter, where the second system communications parameter facilitates lowering the network congestion degree in comparison with the first system communications parameter.

Optionally, the configuration information further includes a trigger condition for reporting a network idleness measurement event. The processor 2103 is further configured to perform the following operations:
receiving network idleness information, where the network idleness information indicates that a network idleness parameter determined by the vehicular device meets the trigger condition for reporting a network idleness measurement event, and the network idleness parameter is used to indicate an idleness degree of the network environment of the vehicular device; and
sending a third system communications parameter to the vehicular device according to the network idleness information, so that the vehicular device performs reconfiguration according to the third system communications parameter, where the third system communications parameter facilitates lowering the network idleness degree in comparison with the second system communications parameter.

Optionally, the processor 2103 is further configured to perform the following operation:
when the third system communications parameter reaches a fifth threshold, sending a third periodic status message sending parameter to the vehicular device, so that the vehicular device sends a periodic status message according to the third periodic status message sending parameter, where the third periodic status message sending parameter facilitates lowering the network idleness degree in comparison with the second periodic status message sending parameter.

In this embodiment of the present invention, a processor 2103 sends a configuration message to a vehicular device, so that the vehicular device determines configuration information. The processor 2103 receives network congestion information, and sends a second periodic status message sending parameter to the vehicular device according to the network congestion information, so that the vehicular device sends a periodic status message according to the second periodic status message sending parameter. Therefore, global congestion control is performed on network congestion, so as to effectively alleviate a network congestion problem in the Internet of Vehicles, and improve stability of a congestion control system.

It may be clearly understood by persons skilled in the art that, for the purpose of convenient and brief description, for specific working processes of the foregoing systems, apparatuses, and units, refer to corresponding processes in the foregoing method embodiments, and details are not described herein.

In the several embodiments provided in this application, it should be understood that the disclosed systems, apparatuses, and methods may be implemented in other manners. For example, the described apparatus embodiments are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate. Parts displayed as units may or may not be physical units, that is, may be located in one position, or may be distributed on multiple network units. Some or all of the units may be selected according to actual needs to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of the present invention. The storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A communication method, comprising:
determining, by a vehicular device, configuration information, wherein the configuration information comprises a first periodic status message sending parameter and a trigger condition for reporting a network congestion measurement event;
determining, by the vehicular device, a network congestion indication parameter, wherein the network congestion indication parameter is used to indicate a congestion degree of a network environment of the vehicular device;
reporting, by the vehicular device, network congestion information to the base station when the network congestion indication parameter meets the trigger condition for reporting a network congestion measurement event;
receiving, by the vehicular device, a second periodic status message sending parameter that is sent by the base station according to the network congestion information, wherein the second periodic status message sending parameter facilitates lowering the network congestion degree in comparison with the first periodic status message sending parameter; and
sending, by the vehicular device, a periodic status message according to the second periodic status message sending parameter.

2. The communication method according to claim 1, wherein that the second periodic status message sending parameter facilitates lowering the network congestion degree in comparison with the first periodic status message sending parameter comprises one or a combination of the following:
periodic status message transmit power comprised in the second periodic status message sending parameter is less than periodic status message transmit power comprised in the first periodic status message sending parameter;
a periodic status message sending period comprised in the second periodic status message sending parameter is greater than a periodic status message sending period comprised in the first periodic status message sending parameter;
periodic status message sending frequency comprised in the second periodic status message sending parameter is less than periodic status message sending frequency comprised in the first periodic status message sending parameter;
a periodic status message transmission rate comprised in the second periodic status message sending parameter is less than a periodic status message transmission rate comprised in the first periodic status message sending parameter; or
a periodic status message length comprised in the second periodic status message sending parameter is less than a periodic status message length comprised in the first periodic status message sending parameter.

3. The communication method according to claim 1, wherein the determining, by a vehicular device, configuration information specifically comprises one of the following:
receiving, by the vehicular device, a configuration message that is sent by the base station by means of system broadcast, so as to determine the configuration information;
receiving, by the vehicular device, a configuration message that is sent by the base station by using radio resource control dedicated signaling, so as to determine the configuration information; or
determining, by the vehicular device, the configuration information by means of preconfiguration.

4. The communication method according to any one of claims 1 to 3, wherein that the network congestion indication parameter meets the trigger condition for reporting a network congestion measurement event specifically comprises:
vehicle-to-vehicle communication resource usage is greater than or equal to a first threshold in a first time period.

5. The communication method according to claim 4, wherein the method further comprises:
when the vehicle-to-vehicle communication resource usage is less than the first threshold in the first time period, stopping, by the vehicular device, reporting network congestion information to the base station.

6. The communication method according to any one of claims 1 to 3, wherein that the network congestion indication parameter meets the trigger condition for reporting a network congestion measurement event specifically comprises:
a rate of successfully receiving a vehicle-to-vehicle communication data packet is less than or equal to a second threshold in a first time period.

7. The communication method according to claim 6, wherein the method further comprises:
when the rate of successfully receiving a vehicle-to-vehicle communication data packet is greater than the second threshold in the first time period, stopping, by the vehicular device, reporting network congestion information to the base station.

8. The communication method according to any one of claims 1 to 3, wherein that the network congestion indication parameter meets the trigger condition for reporting a network congestion measurement event specifically comprises:
duration for waiting to send a vehicle-to-vehicle communication data packet is greater than or equal to a third threshold in a first time period.

9. The communication method according to claim 8, wherein the method further comprises:
when the duration for waiting to send a vehicle-to-vehicle communication data packet is less than the third threshold in the first time period, stopping, by the vehicular device, reporting network congestion information to the base station.

10. The communication method according to any one of claims 1 to 3, wherein the configuration information further comprises a first system communications parameter, the first system communications parameter comprises system communication bandwidth and/or a quantity of configured subframes, and the method further comprises:
when the second periodic status message sending parameter reaches a fourth threshold, receiving, by the vehicular device, a second system communications parameter sent by the base station, wherein the second system communications parameter facilitates lowering the network congestion degree in comparison with the first system communications parameter; and
performing, by the vehicular device, reconfiguration according to the second system communications parameter.

11. The communication method according to claim 10, wherein that the second system communications parameter facilitates lowering the network congestion degree in comparison with the first system communications parameter comprises one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

12. The communication method according to claim 10, wherein that the second periodic status message sending parameter reaches the fourth threshold comprises at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

13. The communication method according to claim 10, wherein the configuration information further comprises a trigger condition for reporting a network idleness measurement event, and the method further comprises:
determining, by the vehicular device, a network idleness indication parameter, wherein the network idleness indication parameter is used to indicate an idleness degree of the network environment of the vehicular device;
reporting, by the vehicular device, network idleness information to the base station when the network idleness indication parameter meets the trigger condition for reporting a network idleness measurement event;
receiving, by the vehicular device, a third system communications parameter that is sent by the base station according to the network idleness information, wherein the third system communications parameter facilitates lowering the network idleness degree in comparison with the second system communications parameter; and
performing, by the vehicular device, reconfiguration according to the third system communications parameter.

14. The communication method according to claim 13, wherein the method further comprises:
when the third system communications parameter reaches a fifth threshold, receiving, by the vehicular device, a third periodic status message sending parameter sent by the base station, wherein the third periodic status message sending parameter facilitates lowering the network idleness degree in comparison with the second periodic status message sending parameter; and
sending, by the vehicular device, a periodic status message according to the third periodic status message sending parameter.

15. A communication method, comprising:
sending, by a base station, a configuration message to a vehicular device, so that the vehicular device determines configuration information, wherein the configuration information comprises a first periodic status message sending parameter and a trigger condition for reporting a network congestion measurement event;
receiving, by the base station, network congestion information, wherein the network congestion information indicates that a network congestion parameter determined by the vehicular device meets the trigger condition for reporting a network congestion measurement event, and the network congestion parameter is used to indicate a congestion degree of a network environment of the vehicular device; and
sending, by the base station, a second periodic status message sending parameter to the vehicular device according to the network congestion information, so that the vehicular device sends a periodic status message according to the second periodic status message sending parameter, wherein the second periodic status message sending parameter facilitates lowering the network congestion degree in comparison with the first periodic status message sending parameter.

16. The communication method according to claim 15, wherein that the second periodic status message sending parameter facilitates lowering the network congestion degree in comparison with the first periodic status message sending parameter comprises one or a combination of the following:
periodic status message transmit power comprised in the second periodic status message sending parameter is less than periodic status message transmit power comprised in the first periodic status message sending parameter;
a periodic status message sending period comprised in the second periodic status message sending parameter is greater than a periodic status message sending period comprised in the first periodic status message sending parameter;
periodic status message sending frequency comprised in the second periodic status message sending parameter is less than periodic status message sending frequency comprised in the first periodic status message sending parameter;
a periodic status message transmission rate comprised in the second periodic status message sending parameter is less than a periodic status message transmission rate comprised in the first periodic status message sending parameter; or
a periodic status message length comprised in the second periodic status message sending parameter is less than a periodic status message length comprised in the first periodic status message sending parameter.

17. The communication method according to claim 15, wherein the sending, by a base station, a configuration message to a vehicular device specifically comprises one of the following:
sending, by the base station, the configuration message to the vehicular device by means of system broadcast; or
sending, by the base station, the configuration message to the vehicular device by using radio resource control dedicated signaling.

18. The communication method according to any one of claims 15 to 17, wherein the network congestion information is sent when vehicle-to-vehicle communication resource usage is greater than or equal to a first threshold in a first time period.

19. The communication method according to any one of claims 15 to 17, wherein the network congestion information is sent when a rate of successfully receiving a vehicle-to-vehicle communication data packet is less than or equal to a second threshold in a first time period.

20. The communication method according to any one of claims 15 to 17, wherein the network congestion information is sent when duration for waiting to send a vehicle-to-vehicle communication data packet is greater than or equal to a third threshold in a first time period.

21. The communication method according to any one of claims 15 to 17, wherein the configuration information further comprises a first system communications parameter, the first system communications parameter comprises system communication bandwidth and/or a quantity of configured subframes, and the method further comprises:
when the second periodic status message sending parameter reaches a fourth threshold, sending, by the base station, a second system communications parameter to the vehicular device, so that the vehicular device performs reconfiguration according to the second system communications parameter, wherein the second system communications parameter facilitates lowering the network congestion degree in comparison with the first system communications parameter.

22. The communication method according to claim 21, wherein that the second system communications parameter facilitates lowering the network congestion degree in comparison with the first system communications parameter comprises one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

23. The communication method according to claim 21, wherein that the second periodic status message sending parameter reaches the fourth threshold comprises at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

24. The communication method according to claim 21, wherein the configuration information further comprises a trigger condition for reporting a network idleness measurement event, and the method further comprises:
receiving, by the base station, network idleness information, wherein the network idleness information indicates that a network idleness parameter determined by the vehicular device meets the trigger condition for reporting a network idleness measurement event, and the network idleness parameter is used to indicate an idleness degree of the network environment of the vehicular device; and
sending, by the base station, a third system communications parameter to the vehicular device according to the network idleness information, so that the vehicular device performs reconfiguration according to the third system communications parameter, wherein the third system communications parameter facilitates lowering the network idleness degree in comparison with the second system communications parameter.

25. The communication method according to claim 24, wherein the method further comprises:
when the third system communications parameter reaches a fifth threshold, sending, by the base station, a third periodic status message sending parameter to the vehicular device, so that the vehicular device sends a periodic status message according to the third periodic status message sending parameter, wherein the third periodic status message sending parameter facilitates lowering the network idleness degree in comparison with the second periodic status message sending parameter.

26. A vehicular device, comprising:
a first determining unit, configured to determine configuration information, wherein the configuration information comprises a first periodic status message sending parameter and a trigger condition for reporting a network congestion measurement event;
a second determining unit, configured to determine a network congestion indication parameter, wherein the network congestion indication parameter is used to indicate a congestion degree of a network environment of the vehicular device;
a first reporting unit, configured to report network congestion information to the base station when the network congestion indication parameter meets the trigger condition for reporting a network congestion measurement event;
a first receiving unit, configured to receive a second periodic status message sending parameter that is sent by the base station according to the network congestion information, wherein the second periodic status message sending parameter facilitates lowering the network congestion degree in comparison with the first periodic status message sending parameter; and
a first sending unit, configured to send a periodic status message according to the second periodic status message sending parameter.

27. The vehicular device according to claim 26, wherein that the second periodic status message sending parameter facilitates lowering the network congestion degree in comparison with the first periodic status message sending parameter comprises one or a combination of the following:
periodic status message transmit power comprised in the second periodic status message sending parameter is less than periodic status message transmit power comprised in the first periodic status message sending parameter;
a periodic status message sending period comprised in the second periodic status message sending parameter is greater than a periodic status message sending period comprised in the first periodic status message sending parameter;
periodic status message sending frequency comprised in the second periodic status message sending parameter is less than periodic status message sending frequency comprised in the first periodic status message sending parameter;
a periodic status message transmission rate comprised in the second periodic status message sending parameter is less than a periodic status message transmission rate comprised in the first periodic status message sending parameter; or
a periodic status message length comprised in the second periodic status message sending parameter is less than a periodic status message length comprised in the first periodic status message sending parameter.

28. The vehicular device according to claim 26, wherein
the first determining unit is specifically configured to receive a configuration message that is sent by the base station by means of system broadcast, so as to determine the configuration information; or
the first determining unit is specifically configured to receive a configuration message that is sent by the base station by using radio resource control dedicated signaling, so as to determine the configuration information; or
the first determining unit is specifically configured to determine the configuration information by means of preconfiguration.

29. The vehicular device according to any one of claims 26 to 28, wherein the configuration information further comprises a first system communications parameter, the first system communications parameter comprises system communication bandwidth and/or a quantity of configured subframes, and the device further comprises:
a second receiving unit, configured to: when the second periodic status message sending parameter reaches a fourth threshold, receive a second system communications parameter sent by the base station, wherein the second system communications parameter facilitates lowering the network congestion degree in comparison with the first system communications parameter; and
a first reconfiguration unit, configured to perform reconfiguration according to the second system communications parameter.

30. The vehicular device according to claim 29, wherein that the second system communications parameter facilitates lowering the network congestion degree in comparison with the first system communications parameter comprises one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

31. The vehicular device according to claim 29, wherein that the second periodic status message sending parameter reaches the fourth threshold comprises at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

32. The vehicular device according to claim 29, wherein the configuration information further comprises a trigger condition for reporting a network idleness measurement event, and the device further comprises:
a third determining unit, configured to determine a network idleness indication parameter, wherein the network idleness indication parameter is used to indicate an idleness degree of the network environment of the vehicular device;
a second reporting unit, configured to report network idleness information to the base station when the network idleness indication parameter meets the trigger condition for reporting a network idleness measurement event;
a fourth receiving unit, configured to receive a third system communications parameter that is sent by the base station according to the network idleness information, wherein the third system communications parameter facilitates lowering the network idleness degree in comparison with the second system communications parameter; and
a second reconfiguration unit, configured to perform reconfiguration according to the third system communications parameter.

33. The vehicular device according to claim 32, wherein the device further comprises:
a fifth receiving unit, configured to: when the third system communications parameter reaches a fifth threshold, receive a third periodic status message sending parameter sent by the base station, wherein the third periodic status message sending parameter facilitates lowering the network idleness degree in comparison with the second periodic status message sending parameter; and
a second sending unit, configured to send a periodic status message according to the third periodic status message sending parameter.

34. Abase station device, comprising:
a first sending module, configured to send a configuration message to a vehicular device, so that the vehicular device determines configuration information, wherein the configuration information comprises a first periodic status message sending parameter and a trigger condition for reporting a network congestion measurement event;
a first receiving module, configured to receive network congestion information, wherein the network congestion information indicates that a network congestion parameter determined by the vehicular device meets the trigger condition for reporting a network congestion measurement event, and the network congestion parameter is used to indicate a congestion degree of a network environment of the vehicular device; and
a second sending module, configured to send a second periodic status message sending parameter to the vehicular device according to the network congestion information, so that the vehicular device sends a periodic status message according to the second periodic status message sending parameter, wherein the second periodic status message sending parameter facilitates lowering the network congestion degree in comparison with the first periodic status message sending parameter.

35. The base station device according to claim 34, wherein that the second periodic status message sending parameter facilitates lowering the network congestion degree in comparison with the first periodic status message sending parameter comprises one or a combination of the following:
periodic status message transmit power comprised in the second periodic status message sending parameter is less than periodic status message transmit power comprised in the first periodic status message sending parameter;
a periodic status message sending period comprised in the second periodic status message sending parameter is greater than a periodic status message sending period comprised in the first periodic status message sending parameter;
periodic status message sending frequency comprised in the second periodic status message sending parameter is less than periodic status message sending frequency comprised in the first periodic status message sending parameter;
a periodic status message transmission rate comprised in the second periodic status message sending parameter is less than a periodic status message transmission rate comprised in the first periodic status message sending parameter; or
a periodic status message length comprised in the second periodic status message sending parameter is less than a periodic status message length comprised in the first periodic status message sending parameter.

36. The base station device according to claim 34, wherein
the first sending module is specifically configured to send the configuration message to the vehicular device by means of system broadcast; or
the first sending module is specifically configured to send the configuration message to the vehicular device by using radio resource control dedicated signaling.

37. The base station device according to any one of claims 34 to 36, wherein the configuration information further comprises a first system communications parameter, the first system communications parameter comprises system communication bandwidth and/or a quantity of configured subframes, and the device further comprises:
a third sending module, configured to: when the second periodic status message sending parameter reaches a fourth threshold, send a second system communications parameter to the vehicular device, so that the vehicular device performs reconfiguration according to the second system communications parameter, wherein the second system communications parameter facilitates lowering the network congestion degree in comparison with the first system communications parameter.

38. The base station device according to claim 37, wherein that the second system communications parameter facilitates lowering the network congestion degree in comparison with the first system communications parameter comprises one or a combination of the following:
system communication bandwidth indicated by the second system communications parameter is greater than the system communication bandwidth indicated by the first system communications parameter; or
a quantity of configured subframes that is indicated by the second system communications parameter is greater than the quantity of configured subframes that is indicated by the first system communications parameter.

39. The base station device according to claim 37, wherein that the second periodic status message sending parameter reaches the fourth threshold comprises at least one of the following five cases: the second periodic status message transmit power is decreased to a first lower limit value, the second periodic status message sending period is increased to a first upper limit value, the second periodic status message sending frequency is decreased to a second lower limit value, the second periodic status message transmission rate is decreased to a third lower limit value, or the second periodic status message size is decreased to a fourth lower limit value.

40. The base station device according to claim 37, wherein the configuration information further comprises a trigger condition for reporting a network idleness measurement event, and the device further comprises:
a second receiving module, configured to receive network idleness information, wherein the network idleness information indicates that a network idleness parameter determined by the vehicular device meets the trigger condition for reporting a network idleness measurement event, and the network idleness parameter is used to indicate an idleness degree of the network environment of the vehicular device; and
a fourth sending module, configured to send a third system communications parameter to the vehicular device according to the network idleness information, so that the vehicular device performs reconfiguration according to the third system communications parameter, wherein the third system communications parameter facilitates lowering the network idleness degree in comparison with the second system communications parameter.

41. The base station device according to claim 40, wherein the device further comprises:
a fifth sending module, configured to: when the third system communications parameter reaches a fifth threshold, send a third periodic status message sending parameter to the vehicular device, so that the vehicular device sends a periodic status message according to the third periodic status message sending parameter, wherein the third periodic status message sending parameter facilitates lowering the network idleness degree in comparison with the second periodic status message sending parameter.

42. A vehicular device, comprising: a receiver, a transmitter, a processor, and a memory, wherein the processor is configured to perform the following operations:
determining configuration information, wherein the configuration information comprises a first periodic status message sending parameter and a trigger condition for reporting a network congestion measurement event;
determining a network congestion indication parameter, wherein the network congestion indication parameter is used to indicate a congestion degree of a network environment of the vehicular device;
reporting network congestion information to the base station when the network congestion indication parameter meets the trigger condition for reporting a network congestion measurement event;
receiving a second periodic status message sending parameter that is sent by the base station according to the network congestion information, wherein the second periodic status message sending parameter facilitates lowering the network congestion degree in comparison with the first periodic status message sending parameter; and
sending a periodic status message according to the second periodic status message sending parameter.

43. The vehicular device according to claim 42, wherein the configuration information further comprises a first system communications parameter, the first system communications parameter comprises system communication bandwidth and/or a quantity of configured subframes, and the processor is further configured to perform the following operations:
when the second periodic status message sending parameter reaches a fourth threshold, receiving a second system communications parameter sent by the base station, wherein the second system communications parameter facilitates lowering the network congestion degree in comparison with the first system communications parameter; and
performing reconfiguration according to the second system communications parameter.

44. The vehicular device according to claim 43, wherein the configuration information further comprises a trigger condition for reporting a network idleness measurement event, and the processor is further configured to perform the following operations:
determining a network idleness indication parameter, wherein the network idleness indication parameter is used to indicate an idleness degree of the network environment of the vehicular device;
reporting network idleness information to the base station when the network idleness indication parameter meets the trigger condition for reporting a network idleness measurement event;
receiving a third system communications parameter that is sent by the base station according to the network idleness information, wherein the third system communications parameter facilitates lowering the network idleness degree in comparison with the second system communications parameter; and
performing reconfiguration according to the third system communications parameter.

45. The vehicular device according to claim 44, wherein the processor is further configured to perform the following operations:
when the third system communications parameter reaches a fifth threshold, receiving a third periodic status message sending parameter sent by the base station, wherein the third periodic status message sending parameter facilitates lowering the network idleness degree in comparison with the second periodic status message sending parameter; and
sending a periodic status message according to the third periodic status message sending parameter.

46. A base station device, comprising: a receiver, a transmitter, a processor, and a memory, wherein the processor is configured to perform the following operations:
sending a configuration message to a vehicular device, so that the vehicular device determines configuration information, wherein the configuration information comprises a first periodic status message sending parameter and a trigger condition for reporting a network congestion measurement event;
receiving network congestion information, wherein the network congestion information indicates that a network congestion parameter determined by the vehicular device meets the trigger condition for reporting a network congestion measurement event, and the network congestion parameter is used to indicate a congestion degree of a network environment of the vehicular device; and
sending a second periodic status message sending parameter to the vehicular device according to the network congestion information, so that the vehicular device sends a periodic status message according to the second periodic status message sending parameter, wherein the second periodic status message sending parameter facilitates lowering the network congestion degree in comparison with the first periodic status message sending parameter.

47. The base station device according to claim 46, wherein the configuration information further comprises a first system communications parameter, the first system communications parameter comprises system communication bandwidth and/or a quantity of configured subframes, and the processor is further configured to perform the following operation:
when the second periodic status message sending parameter reaches a fourth threshold, sending a second system communications parameter to the vehicular device, so that the vehicular device performs reconfiguration according to the second system communications parameter, wherein the second system communications parameter facilitates lowering the network congestion degree in comparison with the first system communications parameter.

48. The base station device according to claim 47, wherein the configuration information further comprises a trigger condition for reporting a network idleness measurement event, and the processor is further configured to perform the following operations:
receiving network idleness information, wherein the network idleness information indicates that a network idleness parameter determined by the vehicular device meets the trigger condition for reporting a network idleness measurement event, and the network idleness parameter is used to indicate an idleness degree of the network environment of the vehicular device; and
sending a third system communications parameter to the vehicular device according to the network idleness information, so that the vehicular device performs reconfiguration according to the third system communications parameter, wherein the third system communications parameter facilitates lowering the network idleness degree in comparison with the second system communications parameter.

49. The base station device according to claim 48, wherein the processor is further configured to perform the following operation:
when the third system communications parameter reaches a fifth threshold, sending a third periodic status message sending parameter to the vehicular device, so that the vehicular device sends a periodic status message according to the third periodic status message sending parameter, wherein the third periodic status message sending parameter facilitates lowering the network idleness degree in comparison with the second periodic status message sending parameter.
